(19) **Europäisches Patentamt European Patent Office Office européen des brevets**

(11) **EP 4 778 808 A1**

(12) **EUROPEAN PATENT APPLICATION**
published in accordance with Art. 153(4) EPC

(43) Date of publication:
22.07.2026 Bulletin 2026/30

(21) Application number: 24864978.2

(22) Date of filing: 25.04.2024

(51) International Patent Classification (IPC):
$B62D\ 6/00^{(2006.01)}$        $B62D\ 101/00^{(2006.01)}$
$B62D\ 113/00^{(2006.01)}$      $B62D\ 117/00^{(2006.01)}$
$B62D\ 119/00^{(2006.01)}$

(52) Cooperative Patent Classification (CPC):
B62D 6/00

(86) International application number:
PCT/JP2024/016215

(87) International publication number:
WO 2025/057469 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.09.2023 JP 2023148729

(71) Applicant: NSK Steering & Control, Inc.
Tokyo, 141-0032 (JP)

(72) Inventor: MOTOHASHI, Yuya
Maebashi-shi, Gunma 371-8527 (JP)

(74) Representative: SSM Sandmair
Patentanwälte Rechtsanwalt
Partnerschaft mbB
Joseph-Wild-Straße 20
81829 München (DE)

(54) **VEHICLE STEERING SYSTEM CONTROL DEVICE**

(57) There is provided a control device for a vehicle steering system capable of obtaining a steering feeling that reflects a condition of a road surface and a state of a vehicle. A steering torque target value generator (200) includes a steering reaction force torque value generator (210) that generates a first torque value that increases or decreases depending on a steering angle, a road surface reaction force sensitive torque compensation value generator (220) that generates a second torque value that increases or decreases depending on a road surface reaction force torque estimation value, a gain ratio generator (230) that generates a first gain (Ga) and a second gain (Gb) the ratio of which changes depending on a vehicle speed, and a steering wheel return compensator (280) that generates a third torque value that decreases as a steering torque increases. A value obtained by multiplying the first torque value by the first gain (Ga), a value obtained by multiplying the second torque value by the second gain (Gb), and the third torque value are added to generate a steering torque target value (Th_ref).

FIG.12

## Description

Field

The present invention relates to a control device for a vehicle steering system.

Background

As one of vehicle steering systems, there is a steer-by-wire (SBW) system in which a steering mechanism (force feedback actuator : FFA) including a steering wheel operated by a driver and a turning mechanism (road wheel actuator : RWA) for turning a steered wheel are mechanically separated. In the SBW system, the steering mechanism and the turning mechanism are electrically connected via a control device (electronic control unit : ECU), an operation of a steering wheel is transmitted to the turning mechanism by an electrical signal to steer a steered wheel, and a steering reaction force for giving an appropriate steering feeling to a driver is generated by the steering mechanism. The steering mechanism generates a steering reaction force by a reaction force actuator including a reaction force motor, and the turning mechanism steers steered wheels by a steering actuator including a turning motor. The reaction force actuator and the steering wheel are mechanically connected via a column shaft, and a reaction force (torque) generated by the reaction force actuator is transmitted to the driver via the column shaft and the steering wheel.

In the SBW system in which the steering mechanism and the turning mechanism are mechanically separated, for example, it is necessary to transmit, to the reaction force device, an oversteer state or an understeer state when the vehicle travels on a low μ road where frictional resistance of the road surface is significantly reduced due to a frozen road surface, a hydroplaning phenomenon in rainy weather, or the like, as a steering reaction force. Patent Literature 1 below discloses a vehicle steering device that reflects a condition of a road surface on a steering reaction force by estimating a reaction force (self-aligning torque) acting from the road surface and adding the reaction force to a reaction force generated based on a steering wheel angle.

Citation List

Patent Literature

Patent Literature 1: WO 2019/167661 A1

Summary

Technical Problem

The self-aligning torque changes depending on the state of the vehicle such as the vehicle speed and the steering angle in addition to the condition of the road surface. In the above-described conventional technique, there is a possibility that a steering feeling that reflects the condition of the road surface cannot be obtained depending on the state of the vehicle.

The present invention has been made in view of the above problems, and an object thereof is to provide a control device for a vehicle steering system capable of obtaining a steering feeling that reflects a condition of a road surface and a vehicle state.

Solution to Problem

In order to achieve the above object, a control device for a vehicle steering system according to an aspect of the present invention is a control device for a vehicle steering system including a steering angle sensor that detects a steering angle of a steering wheel, a torque sensor that detects a steering torque, a reaction force device that drives a reaction force motor that gives a steering reaction force to the steering wheel based on the steering angle and the steering torque, and a turning device that drives a turning motor that steers the steered wheel of the steering wheel based on the steering angle. The control device includes: a steering torque target value generator that generates a steering torque target value that is a target value of the steering torque; a steered angle target value generator that generates, based on the steering angle, a steered angle target value that is a target value of the steered angle of the steered wheel; and a steered angle controller that generates, based on the steered angle target value, a first turning motor current command value that is a target value of a current to be supplied to the turning motor. The steering torque target value generator includes: a steering reaction force torque value generator that generates a first torque value that increases or decreases depending on at least the steering angle; a road surface reaction force sensitive torque compensation value generator that generates a second torque value that increases or decreases depending on at least a road surface reaction force torque estimation value estimated based on the first turning motor current command value; a gain ratio generator that generates a first gain that increases or decreases depending on at least a vehicle speed of a vehicle, and generates a second gain such that a sum of the first gain and the second gain is 1; and a steering wheel return compensator that generates at least a third torque value that decreases as the steering torque increases. The steering torque target value generator adds a value obtained by multiplying the first torque value by the first gain, a value obtained by multiplying the second torque value by the second gain, and the third torque value to generate the steering torque target value.

According to the above configuration, the steering reaction force corresponding to the road surface reaction force torque estimation value can be given to the steering wheel at a ratio corresponding to at least the vehicle speed of the vehicle. Thus, it is possible to obtain a steering feeling that reflects the condition of the road surface and the state of the vehicle. In addition, even when the vehicle is traveling at a low speed on a low $\mu$ road, a stable steering reaction force can be applied.

As a preferred aspect of the control device for the vehicle steering system, the gain ratio generator preferably decreases the first gain as the vehicle speed increases.

According to the above configuration, the steering reaction force corresponding to the road surface reaction force torque estimation value can be given to the steering wheel at a ratio corresponding to the vehicle speed. Thus, it is possible to obtain a steering feeling that reflects the condition of the road surface and the vehicle speed.

As a preferred aspect of the control device for a vehicle steering system, the steering wheel return compensator preferably generates the third torque value by multiplying a torque value that decreases as the steering torque increases by a third gain that increases or decreases depending on a steering angular velocity.

According to the above configuration, the third torque value corresponding to the steering angular velocity can be generated even when the vehicle travels on the low $\mu$ road at low speed. Accordingly, a stable steering reaction force can be applied.

As a preferred aspect of the control device for a vehicle steering system, the steering wheel return compensator preferably increases the third gain as the steering angular velocity increases in a range in which the steering angular velocity is equal to or less than a predetermined value, and preferably decreases the third gain as the steering angular velocity increases when the steering angular velocity exceeds the predetermined value.

According to the above configuration, in the range in which the steering angular velocity is equal to or less than the predetermined value, that is, in the range in which the operation amount of the steering wheel is small, the steering wheel can be returned to the vicinity of a neutral position, and the load on the driver can be reduced.

As a preferred aspect of the control device for a vehicle steering system, the steering wheel return compensator preferably generates the third torque value by multiplying a torque value that decreases as the steering torque increases by a fourth gain based on a ratio between the first gain and the second gain. The steering torque target value generator preferably further includes a damping torque value generator that generates a fourth torque value obtained by multiplying a value obtained by multiplying a steering angular velocity by a damping gain that increases and decreases depending on the vehicle speed by a fifth gain based on a ratio between the first gain and the second gain. The steering torque target value generator preferably adds a value obtained by multiplying the first torque value by the first gain, a value obtained by multiplying the second torque value by the second gain, the third torque value, and the fourth torque value to generate the steering torque target value.

According to the above configuration, by appropriately setting the ratio between the fourth gain and the fifth gain according to vehicle conditions, it is possible to obtain a steering feeling that more appropriately reflects the condition of the road surface and the state of the vehicle.

As a preferred aspect of the control device for a vehicle steering system, the fourth gain may increase as the first gain increases, and the fifth gain may decrease as the first gain increases.

As a preferred aspect of the control device for a vehicle steering system, the fourth gain may decrease as the first gain increases, and the fifth gain may increase as the first gain increases.

As a preferred aspect of the control device for a vehicle steering system, the steered angle controller preferably includes a friction compensator that calculates, based on the steered angle target value, a turning motor current compensation value different between a case where the steered wheel is turned rightward and a case where the steered wheel is turned leftward. The steered angle controller preferably generates a second turning motor current command value for driving the turning motor based on the first turning motor current command value and the turning motor current compensation value.

According to the above configuration, friction compensation control can be effectively performed regardless of steering wheel operation speed of the driver. Thus, it is possible to reduce the sense of discomfort given to the driver in switching the steering direction from turning increase to turning back of the steering wheel operation by the driver or switching from the turning back to the turning increase.

As a preferred aspect of the control device for a vehicle steering system, the turning motor current compensation value preferably has a hysteresis characteristic depending on a change in the steered angle target value.

According to the above configuration, different turning motor current compensation values are calculated between when the steered wheels are turned to the right and when the steered wheels are turned to the left.

As a preferred aspect of the control device for a vehicle steering system, the turning motor current compensation value preferably monotonically increases in a range from a first steered angle target value when steering is started to a second steered angle target value or less obtained by adding a predetermined steered angle change amount threshold to the first steered angle target value, and becomes a constant value in a range larger than the second steered angle target value.

According to the above configuration, friction compensation control can be effectively performed from a state where the steered wheel is stationary regardless of the steering wheel operation speed of the driver. Thus, even in a situation where the steering wheel operation by the driver is quite slow, it is possible to reduce the sense of discomfort given to the driver in switching the steering direction from turning increase to turning back of the steering wheel operation by the driver or switching from the turning back to the turning increase.

As a preferred aspect of the control device for a vehicle steering system, the friction compensator preferably increases or decreases the turning motor current compensation value based on the second turning motor current command value.

According to the above configuration, the friction compensation control based on the frictional force caused by gear torque can be implemented.

As a preferred aspect of the control device for a vehicle steering system, the turning motor current compensation value preferably monotonically increases as the second turning motor current command value increases.

According to the above configuration, it is possible to implement friction compensation control based on the frictional force caused by the gear torque that monotonically increases as the second turning motor current command value increases.

As a preferred aspect of the control device for a vehicle steering system, the control device preferably further includes: a current compensation value calculator that calculates a first current compensation value; and a current sensitive gain generator that generates a gain that monotonically increases as the second turning motor current command value increases. The friction compensator preferably calculates a second current compensation value by multiplying the first current compensation value by the gain.

According to the above configuration, it is possible to implement friction compensation control based on the frictional force caused by the gear torque that monotonically increases as the second turning motor current command value increases.

As a preferred aspect of the control device for a vehicle steering system, the friction compensator preferably holds data in which the second turning motor current command value is associated with a gain that monotonically increases as the second turning motor current command value increases, and preferably calculates the turning motor current compensation value based on the data.

According to the above configuration, it is possible to implement friction compensation control based on the frictional force caused by the gear torque that monotonically increases as the second turning motor current command value increases.

Advantageous Effects of Invention

According to the present invention, a steering reaction force corresponding to a road surface reaction force torque estimation value can be given to the steering wheel at a ratio corresponding to the state of the vehicle, and thus it is possible to provide a control device for a vehicle steering system capable of obtaining the steering feeling that reflects the condition of the road surface and the state of the vehicle.

Brief Description of Drawings

FIG. 1 is a configuration diagram illustrating an example of an outline of an SBW system including a control device according to the present disclosure.
FIG. 2 is a schematic diagram illustrating a hardware configuration of an ECU.
FIG. 3 is a diagram illustrating an example of a control block configuration of the control device according to the present disclosure.
FIG. 4 is a block diagram illustrating a configuration example of a steered angle controller.
FIG. 5 is a block diagram illustrating a configuration example of a friction compensator.
FIG. 6 is a line graph illustrating a characteristic example of a first current compensation value in a current compensation value calculator.

FIG. 7A is a line graph illustrating a first example of a current sensitive gain map.

FIG. 7B is a line graph illustrating a second example of the current sensitive gain map.

FIG. 8 is a line graph illustrating an example of output characteristics of the friction compensator.

FIG. 9 is a block diagram illustrating a configuration example of a friction compensator according to a modification.

FIG. 10A is a first conceptual graph illustrating a specific example of friction compensation control by the friction compensator.

FIG. 10B is a first conceptual graph illustrating a specific example of friction compensation control by the friction compensator.

FIG. 11A is a second conceptual graph illustrating a specific example of friction compensation control by the friction compensator.

FIG. 11B is a second conceptual graph illustrating a specific example of friction compensation control by the friction compensator.

FIG. 12 is a block diagram illustrating a configuration example of a steering torque target value generator according to a first embodiment.

FIG. 13 is a block diagram illustrating a configuration example of a steering reaction force torque value generator.

FIG. 14A is a line graph illustrating a characteristic example of a basic map.

FIG. 14B is a line graph illustrating a characteristic example of a torque value Tref_a.

FIG. 15 is a block diagram illustrating a configuration example of a damping torque value generator according to the first embodiment.

FIG. 16A is a graph illustrating a characteristic example of a damping gain map.

FIG. 16B is a conceptual graph illustrating a characteristic example of a torque value Tref_a+Tref_b.

FIG. 17 is a region diagram for describing a steering direction in the present disclosure.

FIG. 18 is a block diagram illustrating a configuration example of a hysteresis compensator.

FIG. 19 is a line graph illustrating an example of output characteristics of the hysteresis compensator.

FIG. 20 is a block diagram illustrating a configuration example of a road surface reaction force sensitive torque compensation value generator.

FIG. 21 is a schematic diagram illustrating a state of torque generated between a road surface and a turning motor.

FIG. 22 is a block diagram illustrating a configuration example of a road surface reaction force torque estimator.

FIG. 23 is a conceptual diagram for describing a method of calculating an actual road surface reaction force torque acting on the turning mechanism.

FIG. 24 is a conceptual diagram illustrating a configuration for executing a simulation for deriving a transfer function Gfil.

FIG. 25 is a line graph illustrating a characteristic example of a road surface reaction force sensitive torque map.

FIG. 26 is a line graph conceptually illustrating a characteristic example of a second torque value after sign conversion.

FIG. 27A is a line graph conceptually illustrating a first example of a gain ratio setting example in a case where a vehicle speed is used as a parameter.

FIG. 27B is a line graph conceptually illustrating a second example of a gain ratio setting example in a case where a vehicle speed is used as a parameter.

FIG. 27C is a line graph conceptually illustrating a third example of a gain ratio setting example in a case where a vehicle speed is used as a parameter.

FIG. 28 is a line graph conceptually illustrating an example of a gain ratio setting example in a case where an actual steering angle is used as a parameter.

FIG. 29 is a line graph conceptually illustrating an example of a gain ratio setting example in a case where an actual steered angle is used as a parameter.

FIG. 30 is a block diagram illustrating a configuration example of a gain ratio generator in a case where a vehicle speed and an actual steering angle are used as parameters.

FIG. 31A is a line graph conceptually illustrating an example of a gain ratio setting example using a vehicle speed as a parameter.

FIG. 31B is a line graph conceptually illustrating an example of a gain ratio setting example in a case where an actual steering angle is used as a parameter.

FIG. 32 is a block diagram illustrating a configuration example of a gain ratio generator in a case where a vehicle speed and an actual steered angle are used as parameters.

FIG. 33A is a line graph conceptually illustrating an example of a gain ratio setting example using a vehicle speed as a parameter.

FIG. 33B is a line graph conceptually illustrating an example of a gain ratio setting example using an actual steered angle as a parameter.

FIG. 34 is a 3D map conceptually illustrating an example of a gain ratio generation method.

FIG. 35 is a block diagram illustrating a configuration example of a steering wheel return compensator according to the first embodiment.

FIG. 36 is a line graph illustrating a characteristic example of an actual torque sensitive torque map.

FIG. 37 is a line graph illustrating a characteristic example of a steering angular velocity sensitive gain map.

FIG. 38 is a graph conceptually describing a specific example of an effect of the steering wheel return compensator according to the first embodiment.

FIG. 39 is a block diagram illustrating a configuration example of a steering torque target value generator according to a second embodiment.

FIG. 40 is a block diagram illustrating a configuration example of a steering wheel return compensator according to the second embodiment.

FIG. 41 is a block diagram illustrating a configuration example of a damping torque value generator according to the second embodiment.

FIG. 42A is a line graph illustrating a first characteristic example of a gain ratio sensitive gain map of the steering wheel return compensator.

FIG. 42B is a line graph illustrating a first characteristic example of the gain ratio sensitive gain map of the damping torque value generator.

FIG. 43A is a line graph illustrating a second characteristic example of the gain ratio sensitive gain map of the steering wheel return compensator.

FIG. 43B is a line graph illustrating a second characteristic example of the gain ratio sensitive gain map of the damping torque value generator.

FIG. 44A is a line graph illustrating a third characteristic example of the gain ratio sensitive gain map of the steering wheel return compensator damping torque value generator.

FIG. 44B is a line graph illustrating a third characteristic example of the gain ratio sensitive gain map of the damping torque value generator.

FIG. 45A is a line graph illustrating a fourth characteristic example of the gain ratio sensitive gain map of the steering wheel return compensator damping torque value generator.

FIG. 45B is a line graph illustrating a fourth characteristic example of the gain ratio sensitive gain map of the damping torque value generator.

FIG. 46 is a graph conceptually describing a specific example of an effect of the steering wheel return compensator according to the second embodiment. Description of Embodiments

Hereinafter, modes for carrying out the invention (hereinafter referred to as embodiments) will be described in detail with reference to the drawings. The present invention is not limited by the following embodiments. In addition, components in the following embodiments include those that can be easily assumed by those skilled in the art, those that are substantially the same, and those within what is called an equivalent range. Furthermore, the components disclosed in the following embodiments can be appropriately combined.

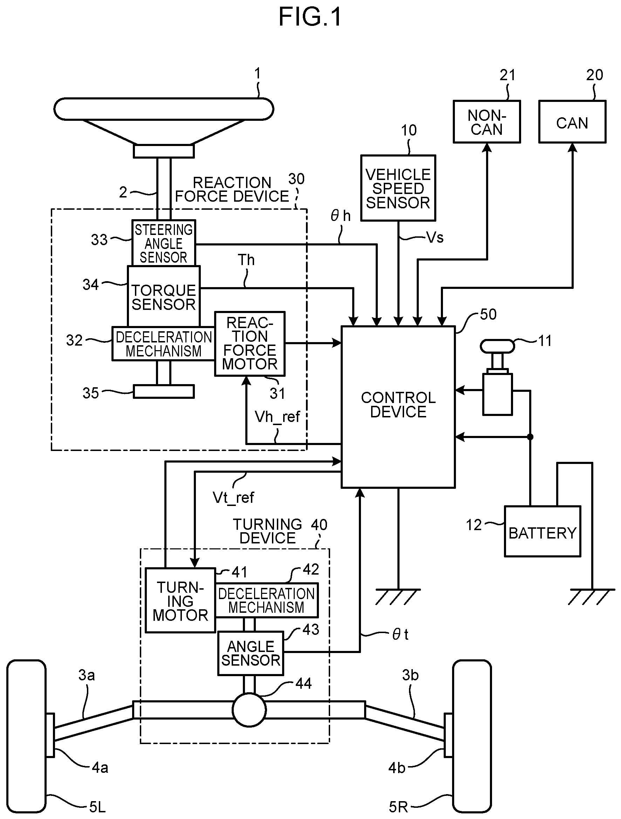

FIG. 1 is a configuration diagram illustrating an example of an outline of an SBW system including a control device according to the present disclosure. The SBW system includes a reaction force device 30 constituting a steering mechanism having a steering wheel operated by a driver, a turning device 40 constituting a turning mechanism for steering steered wheels, and a control device 50 for controlling both the devices.

The SBW system does not include an intermediate shaft mechanically coupled to a column shaft (a steering shaft and a steering wheel shaft) 2, which is included in a general electric power steering device, and transmits an operation of a steering wheel 1 by a driver as an electrical signal, specifically, a steering angle $\theta h$ output from the reaction force device 30 as an electrical signal.

The reaction force device 30 includes a reaction force motor 31 and a deceleration mechanism 32 that decelerates the rotational speed of the reaction force motor 31. The reaction force device 30 transmits the motion state of the vehicle transmitted from steered wheels 5L and 5R to the driver as a steering reaction force. The reaction force motor 31 gives a steering reaction force to the steering wheel 1 via the deceleration mechanism 32.

The reaction force device 30 further includes a steering angle sensor 33 and a torque sensor 34. The steering angle sensor 33 detects the steering angle $\theta h$ of the steering wheel 1. The torque sensor 34 detects a steering torque Th of the steering wheel 1. Hereinafter, the steering angle $\theta h$ detected by the steering angle sensor 33 is also referred to as an "actual steering angle $\theta h\_act$", and the steering torque Th detected by the torque sensor 34 is also referred to as an "actual steering torque Th_act".

In the present disclosure, the column shaft 2 is provided with a stopper (rotation limiting mechanism) 35 that physically defines a steering end that is the steering limit. That is, the magnitude (absolute value) of the steering angle $\theta h$ is limited by the stopper 35.

The turning device 40 includes a turning motor 41, a deceleration mechanism 42 that reduces the rotational speed of the turning motor 41, and a pinion rack mechanism 44 that converts a rotational motion of the turning motor 41 into a linear motion. The turning device 40 drives the turning motor 41 based on the steering angle $\theta h$, gives the driving force to the pinion rack mechanism 44 via the deceleration mechanism 42, and steers the steered wheels 5L and 5R via tie rods 3a and 3b. An angle sensor 43 is disposed near the pinion rack mechanism 44 and detects the steered angle θt of the steered wheels 5L and 5R. Instead of the steered angle θt of the steered wheels 5L and 5R, for example, a motor angle of the turning motor 41, a position of a rack, or the like may be detected, and the detected value may be used. Hereinafter, the steered angle θt detected by the angle sensor 43 is also referred to as an "actual steered angle θt_act".

In the present disclosure, the actual steering angle θh_act and the actual steered angle θt_act are also collectively referred to simply as a "steering angle" of the vehicle.

In order to cooperatively control the reaction force device 30 and the turning device 40, the control device 50 generates a voltage control command value Vh_ref for driving and controlling the reaction force motor 31 and a voltage control command value Vt_ref for driving and controlling the turning motor 41 based on a vehicle speed Vs and the like detected by a vehicle speed sensor 10 in addition to information such as the steering angle θh and the steered angle θt output from both of the devices.

Power is supplied from a battery 12 to the control device 50, and an ignition key signal is input to the control device through an ignition key 11. A controller area network (CAN) 20 for exchanging various information of the vehicle is connected to the control device 50, and the vehicle speed Vs can be received from the CAN 20. Other than the CAN 20, the control device 50 can also be connected to a non-CAN 21 that transmits and receives communication, analog/digital signals, radio waves, and the like.

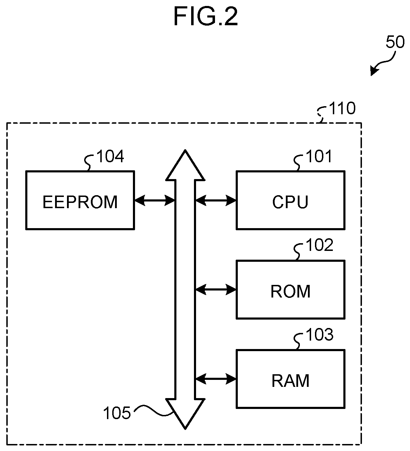

Specifically, the control device 50 is, for example, an electronic control unit (ECU) mounted on a vehicle. The ECU mainly includes a CPU (also including MCU, MPU, and the like). FIG. 2 is a schematic diagram illustrating a hardware configuration of the ECU. As illustrated in FIG. 2, the control device 50 of the vehicle steering system according to the embodiment includes a control computer (Electronic Control Unit, hereinafter also referred to as "ECU") 110.

The ECU 110 includes a central processing unit (CPU) 101, a read only memory (ROM) 102, a random access memory (RAM) 103, an electrically erasable programmable ROM (EEPROM) 104, and the like, which are connected to a bus 105. The CPU 101 executes a control program stored in the ROM 102. The reaction force device 30 and the turning device 40 are cooperatively controlled mainly by the control program executed by the ECU 110. The control device 50 may include one ECU, or the control device 50 may include a reaction force control ECU that controls the reaction force device 30 and a turning control ECU that controls the turning device 40.

The ROM 102 is used as a memory for storing a control program and control data used when the control program is executed. The RAM 103 is used as a work memory for operating the control program.

The EEPROM 104 is a nonvolatile memory capable of holding stored contents even after power is shut off, and stores control data and the like used by the CPU 101 to execute a control program. The various data stored in the EEPROM 104 is used on the control program developed in the RAM 103 after the ECU 110 is powered on, and is overwritten in the EEPROM 104 at a predetermined timing. The EEPROM is used as a nonvolatile memory, but the present invention is not limited thereto, and other nonvolatile memories such as a FLASH-ROM (registered trademark) and an SDRAM may be used.

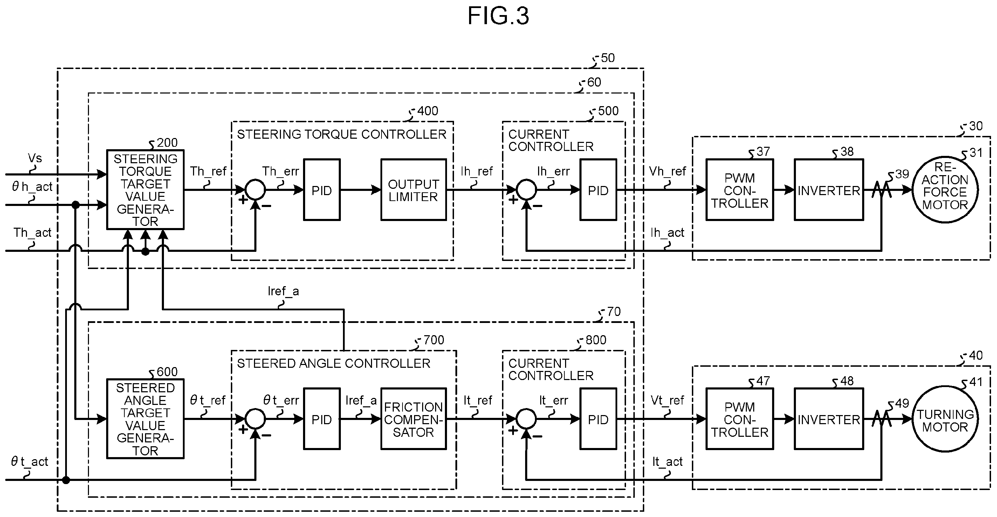

FIG. 3 is a diagram illustrating an example of a control block configuration of the control device according to the present disclosure. In FIG. 3, the reaction force device 30 includes a pulse width modulation (PWM) controller 37, an inverter 38, and a motor current detector 39 in addition to the reaction force motor 31 and the above-described configuration. In addition to the turning motor 41 and the above-described configuration, the turning device 40 includes a PWM controller 47, an inverter 48, and a motor current detector 49. The control device 50 implements each control block of a reaction force control system 60 that controls the reaction force device 30 and a turning control system 70 that controls the turning device 40. The reaction force control system 60 and the turning control system 70 cooperate to control the reaction force device 30 and the turning device 40. In a case where the control device 50 includes the reaction force control ECU and the turning control ECU, the reaction force control system 60 may be implemented by the reaction force control ECU, and the turning control system 70 may be implemented by the turning control ECU. In this case, the reaction force control system 60 in the following description only needs to be replaced with the reaction force control ECU, and the turning control system 70 only needs to be replaced with the turning control ECU.

Each control block in the reaction force control system 60 is implemented by a reaction force control program executed in the ECU 110. Each control block in the turning control system 70 is implemented by a turning control program executed in the ECU 110. Some or all of the control blocks of the control device 50 may be implemented by hardware. The control device 50 may include the PWM controller 37, the inverter 38, the motor current detector 39, the PWM controller 47, the inverter 48, and the motor current detector 49.

As illustrated in FIG. 3, the control device 50 includes, as control blocks, a steering torque target value generator 200, a steering torque controller 400, a current controller 500, a steered angle target value generator 600, a steered angle controller 700, and a current controller 800. The steering torque target value generator 200, the steering torque controller 400, and the current controller 500 are control blocks constituting the reaction force control system 60. The steered angle target value generator 600, the steered angle controller 700, and the current controller 800 are control blocks constituting the turning control system 70.

The reaction force control system 60 performs control so that the actual steering torque Th_act detected by the torque sensor 34 follows a steering torque target value Th_ref that is a target value of the steering torque of the reaction force device 30.

The steering torque target value generator 200 generates the steering torque target value Th_ref.

The steering torque controller 400 generates a reaction force motor current command value Ih_ref for driving the reaction force motor 31. In the steering torque controller 400, a current command value is generated so that a deviation Th_err between the steering torque target value Th_ref and the actual steering torque Th_act approaches zero, output limitation on upper and lower limit values of the current command value is performed by the output limiter, and the reaction force motor current command value Ih_ref is calculated.

The current controller 500 performs current control of the reaction force motor 31. The current controller 500 calculates a voltage control command value Vh_ref so that a deviation Ih_err between the reaction force motor current command value Ih_ref output from the steering torque controller 400 and an actual current value (motor current value) Ih_act of the reaction force motor 31 detected by the motor current detector 39 approaches zero.

In the reaction force device 30, driving of the reaction force motor 31 is controlled via the PWM controller 37 and the inverter 38 based on the voltage control command value Vh_ref.

The turning control system 70 performs control so that the actual steered angle θt_act detected by the angle sensor 43 follows a steered angle target value θt_ref.

The steered angle target value generator 600 generates the steered angle target value θt_ref based on the steering angle θh.

The steered angle controller 700 generates a second turning motor current command value It_ref for driving the turning motor 41. Specifically, in the steered angle controller 700, a first turning motor current command value Iref_a, which is a control target value of the current supplied to the turning motor 41, is generated so that a deviation θt_err between the steered angle target value θt_ref and the actual steered angle θt_act approaches zero, and friction compensation control is performed on the first turning motor current command value Iref_a by a friction compensator to calculate the second turning motor current command value It_ref. Hereinafter, an example in which the friction compensator is provided in the steered angle controller 700 will be described, but a configuration not including the friction compensator may be used. In the configuration not including the friction compensator, the first turning motor current command value Iref_a after the PID control is generated as the second turning motor current command value It_ref.

The current controller 800 performs current control of the turning motor 41. The current controller 800 calculates a voltage control command value Vt_ref so that a deviation It_err between the second turning motor current command value It_ref output from the steered angle controller 700 and an actual current value (motor current value) It_act of the turning motor 41 detected by the motor current detector 49 approaches zero.

In the turning device 40, driving of the turning motor 41 is controlled via the PWM controller 47 and the inverter 48 based on the voltage control command value Vt_ref.

In the present embodiment, each of the steering torque controller 400, the current controller 500, the steered angle target value generator 600, and the current controller 800 only needs to have a configuration capable of implementing each control in the reaction force control system 60 or the turning control system 70, and is not limited by the configuration of each control block.

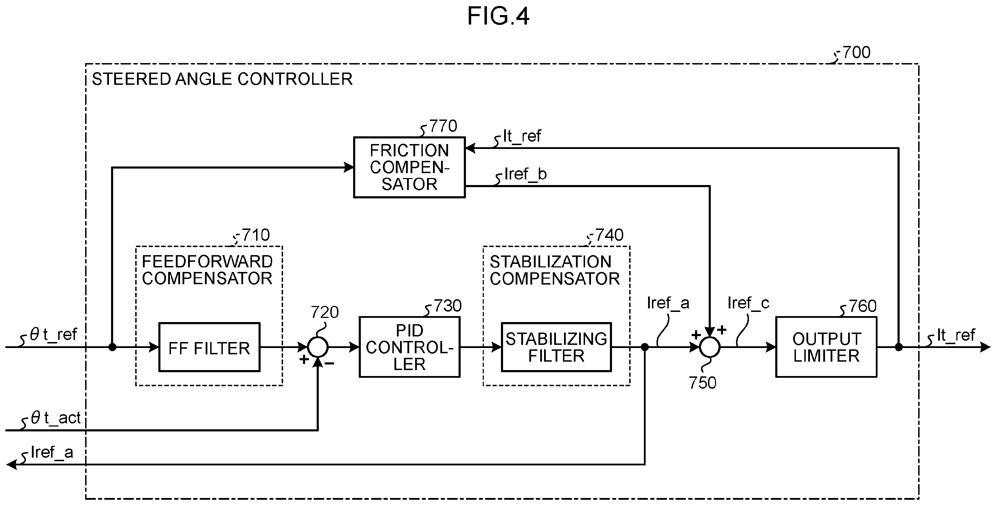

Here, the steered angle controller 700 will be described. FIG. 4 is a block diagram illustrating a configuration example of a steered angle controller. As illustrated in FIG. 4, the steered angle controller 700 includes a feedforward compensator 710, a PID controller 730, a stabilization compensator 740, an output limiter 760, a friction compensator 770, and adders 720 and 750.

The feedforward compensator 710 includes a filter (FF filter) for improving the followability of the actual steered angle θt_act with respect to the steered angle target value θt_ref. The feedforward compensator 710 performs filter processing on the steered angle target value θt_ref. Specifically, for example, an LPF having a transfer function with a first-order delay or a second-order delay is used, and the LPF is designed so that a time delay caused by filter processing by the LPF is equivalent to a following delay of the actual steered angle θt_act with respect to the steered angle target value θt_ref.

The PID controller 730 performs PID control so that a deviation θt_err between the steered angle target value θt_ref, which is a calculation result of the adder 720, and the actual steered angle θt_act approaches zero.

The stabilization compensator 740 includes a filter (stabilization filter) having a transmission characteristic necessary for stabilizing control. The stabilization compensator 740 performs filter processing on the output value of the PID controller 730.

The output limiter 760 performs output limitation processing on the current command value Iref_c, which is a calculation result of the adder 750, and outputs the second turning motor current command value It_ref. In the output limiter 760, an upper limit value and a lower limit value for the current command value Iref_c are set in advance. The output limiter 760 limits the upper and lower limit values of the current command value Iref_c and outputs the second turning motor current command value It_ref.

The feedforward compensator 710 and the stabilization compensator 740 described above are not necessarily required components, and for example, any one or both of the feedforward compensator 710 and the stabilization compensator 740 need not be included.

Based on the steered angle target value θt_ref, the friction compensator 770 calculates a second current compensation value Iref_b for compensating the following delay of the actual steered angle θt_act with respect to the steered angle target value θt_ref caused by friction in the turning mechanism. Hereinafter, a specific configuration and operation of the friction compensator 770 will be described in detail.

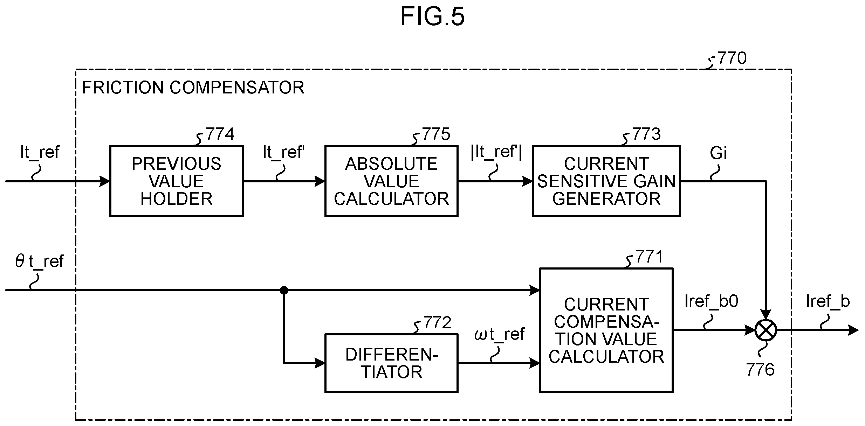

FIG. 5 is a block diagram illustrating a configuration example of the friction compensator. As illustrated in FIG. 5, the friction compensator 770 includes a current compensation value calculator 771 and a current sensitive gain generator 773 as main components.

The steered angle target value θt_ref and a turning speed target value ωt_ref calculated by differentiating the steered angle target value θt_ref by a differentiator 772 are input to the current compensation value calculator 771. The current compensation value calculator 771 calculates the first current compensation value Iref_b0 based on the steered angle target value θt_ref and the turning speed target value ωt_ref.

Hereinafter, a calculation method of the first current compensation value Iref_b0 by the current compensation value calculator 771 will be described.

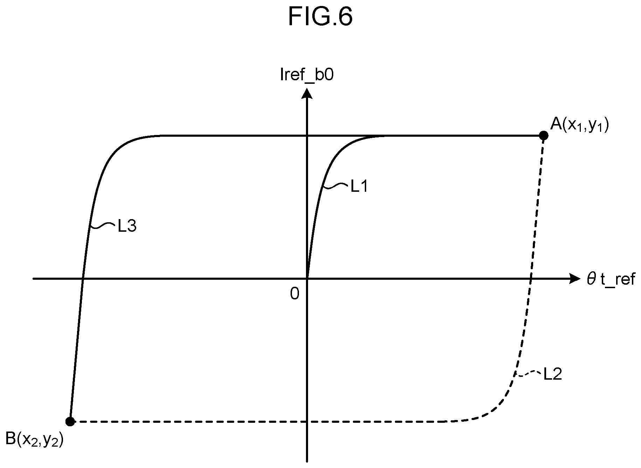

FIG. 6 is a line graph illustrating a characteristic example of the first current compensation value in the current compensation value calculator. In FIG. 6, the horizontal axis represents the steered angle target value θt_ref, and the vertical axis represents the first current compensation value Iref_b0. In FIG. 6, a solid line indicates the first current compensation value Iref_b0 at the time of rightward steering, and a broken line indicates the first current compensation value Iref_b0 at the time of leftward steering. As illustrated in FIG. 6, the first current compensation value Iref_b0 calculated by the current compensation value calculator 771 has hysteresis characteristics that differ between when steering to left and when steering to left. L1 illustrated in FIG. 6 represents a locus when rightward turning is performed from the center position (origin (0,0)) of the steered wheels 5L and 5R, L2 represents a locus when switching from rightward turning to leftward turning occurs at coordinates $A(x_1,y_1)$, and L3 represents a locus when switching from rightward turning to leftward turning occurs at coordinates $B(x_2,y_2)$.

The current compensation value calculator 771 calculates the first current compensation value Iref_b0 using the following Expressions (1) and (2) based on the steered angle target value θt_ref and the turning speed target value ωt_ref. Specifically, when the sign ωt_ref(sgn) of the turning speed target value ωt_ref is a positive value ("+"), the first current compensation value Iref_b0 is calculated using the following Expression (1); and when the sign ωt_ref(sgn) of the turning speed target value ωt_ref is a negative value ("-"), the first current compensation value Iref_b0 is calculated using the following Expression (2). In the following Expressions (1) and (2), x is the turning speed target value ωt_ref, $y_R$ is the first current compensation value Iref_b0 at the time of rightward steering, and $y_L$ is the first current compensation value Iref_b0 at the time of leftward steering. The coefficient a is a value larger than 1, and the coefficient c is a value larger than 0. The coefficient Ahys indicates an output width of the hysteresis characteristic (a width of the first current compensation value Iref_b0), and the coefficient c is a coefficient representing roundness of the hysteresis characteristic.

$$y_R = Ahys\{1 - a^{-c(x-b)}\} \qquad\qquad (1)$$

$$y_L = -Ahys\{1 - a^{c(x-b')}\} \qquad\qquad (2)$$

That is, the current compensation value calculator 771 calculates the first current compensation value Iref_b0 ($y_R$) using the above Expression (1) at the time of rightward steering (ωt_ref(sgn) = "+"), and calculates the first current compensation value Iref_b0 ($y_L$) using the above Expression (2) at the time of leftward steering (ωt_ref (sgn) = "-").

When the switching from the rightward steering to the leftward steering occurs (ωt_ref(sgn) = "+" → "-"), or when the switching from the leftward steering to the rightward steering occurs (ωt_ref(sgn) = "-" → "+"), the current compensation value calculator 771 uses the previous values of the steered angle target value θt_ref and the first current compensation value Iref_b0 and substitutes a coefficient b or b' expressed by the following Expression (3) or (4) into the above Expression (1) or (2) applied after the steering switching. Thereby, continuity before and after steering switching is maintained. Specifically, when switching from the rightward steering to the leftward steering occurs (ωt_ref(sgn) = "+" → "-"), the current compensation value calculator 771 applies the previous values (coordinates $A(x_1,y_1)$ illustrated in FIG. 6) of the steered angle target value θt_ref and the first current compensation value Iref_b0 to the above Expression (2), and substitutes the coefficient b' expressed by the following Expression (4) to calculate the first current compensation value Iref_b0. When switching from leftward steering to rightward steering occurs (ωt_ref(sgn) = "-" → "+"), the current compensation value calculator 771 applies the previous values (coordinates $B(x_2,y_2)$ illustrated in FIG. 6) of the steered angle target value θt_ref and the first current compensation value Iref_b0 to the above Expression (1), and substitutes the coefficient b expressed by the following Expression (3) to calculate the first current compensation value Iref_b0.

$$b = x_1 + (1/c) \log_a \{1 - (y_1/Ahys)\} \tag{3}$$

$$b' = x_1 - (1/c) \log_a \{1 - (y_1/Ahys)\} \tag{4}$$

The above Expressions (3) and (4) can be derived by substituting $x_1$ for x and substituting $y_1$ for $y_R$ and $y_L$ in the above Expressions (1) and (2).

For example, in a case where the Napier's constant e is used as the coefficient a, the above Expressions (1), (2), (3), and (4) can be expressed by the following Expressions (5), (6), (7), and (8), respectively.

$$y_R = Ahys [1 - \exp\{-c(x-b)\}] \tag{5}$$

$$y_L = -Ahys [\{1 - \exp\{c(x-b')\}\}] \tag{6}$$

$$b = x_1 + (1/c) \log_e \{1 - (y_1/Ahys)\} \tag{7}$$

$$b' = x_1 - (1/c) \log_e \{1 - (y_1/Ahys)\} \tag{8}$$

Returning back to FIG. 5, a previous value holder 774 holds a previous output value It_ref' of the steered angle controller 700. Specifically, the previous output value It _ref' is the second turning motor current command value It_ref in the previous process. The previous value holder 774 includes, for example, a RAM of an ECU constituting the control device 50.

In the present disclosure, an absolute value calculator 775 performs absolute value processing on the previous output value It _ref' of the steered angle controller 700 output from the previous value holder 774.

The previous output value |It_ref'| of the steered angle controller 700 subjected to the absolute value processing by the absolute value calculator 775 is input to the current sensitive gain generator 773. The current sensitive gain generator 773 generates a gain Gi corresponding to the previous output value |It_ref'| of the steered angle controller 700.

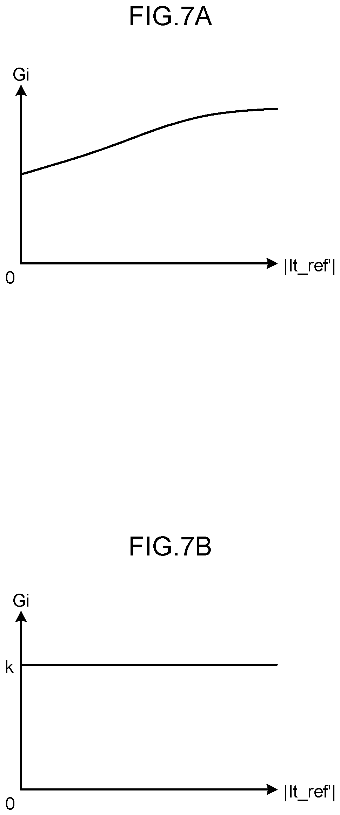

The current sensitive gain generator 773 has a current sensitive gain map in which the gain Gi corresponding to the previous output value |It_ref'| of the steered angle controller 700 is set. The current sensitive gain map is stored in, for example, the ROM of the ECU constituting the control device 50. FIG. 7A is a line graph illustrating a first example of the current sensitive gain map. FIG. 7B is a line graph illustrating a second example of the current sensitive gain map.

The first example of the current sensitive gain map illustrated in FIG. 7A has a current value sensitive characteristic in which the gain Gi increases or decreases depending on the previous output value |It_ref'| of the steered angle controller 700. More specifically, as illustrated in FIG. 7A, the gain Gi monotonically increases as the previous output value |It_ref'| of the steered angle controller 700 increases.

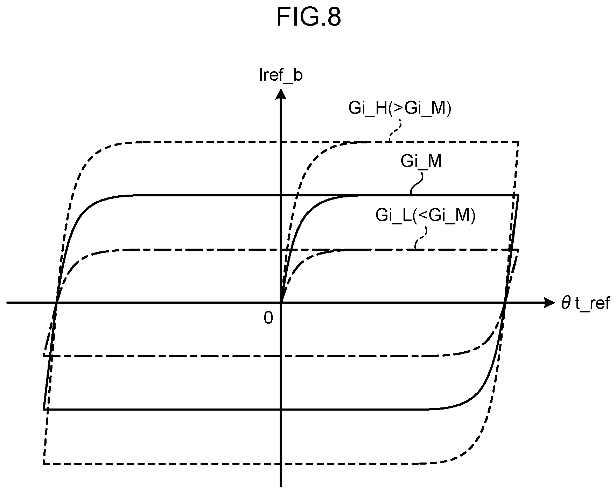

FIG. 8 is a line graph illustrating an example of output characteristics of the friction compensator. In FIG. 8, the horizontal axis represents the steered angle target value θt_ref, and the vertical axis represents the second current compensation value Iref_b.

The frictional force generated in the turning mechanism includes friction due to gear torque interposed between the turning motor 41 and the deceleration mechanism 42. The gear torque refers to a torque caused by a frictional force generated in a mechanical element of the speed reducer. For example, in the case of a worm reduction gear, a frictional torque caused by a frictional force generated at the meshing portion between the worm gear and the worm wheel may be defined as a gear torque. The frictional force due to the gear torque monotonically increases with respect to the motor current.

In the present disclosure, the friction compensator 770 multiplies the first current compensation value Iref_b0 output from the current compensation value calculator 771 by the gain Gi generated by the current sensitive gain generator 773 (by a multiplier 776) to calculate the second current compensation value Iref_b. Thus, as illustrated in FIG. 8, a characteristic is obtained in which the output width of the hysteresis characteristic (the width of the second current compensation value Iref_b) increases or decreases depending on the second turning motor current command value It_ref, and friction compensation control based on the frictional force caused by the gear torque can be implemented.

Specifically, when the second turning motor current command value It_ref is relatively large, the gear torque becomes relatively large, and thus the frictional force caused by the gear torque acts strongly. Under such circumstances, by multiplying the first current compensation value Iref_b0 output from the current compensation value calculator 771 by the gain Gi_H relatively larger than the gain Gi_M, the output width of the hysteresis characteristic (the width of the second current compensation value Iref_b) can be increased as indicated by a broken line.

When the second turning motor current command value It_ref is relatively small, the gear torque becomes relatively small, and thus the frictional force caused by the gear torque becomes small. Under such circumstances, by multiplying the first current compensation value Iref_b0 output from the current compensation value calculator 771 by the gain Gi_L relatively smaller than the gain Gi_M, the output width of the hysteresis characteristic (the width of the second current compensation value Iref_b) can be reduced as indicated by an alternate long and short dash line.

The current sensitive gain map is not limited to the first example illustrated in FIG. 7A. For example, as in the second example illustrated in FIG. 7B, the current sensitive gain map may be such that, regardless of the second turning motor current command value It_ref (previous output value |It_ref'| of the steered angle controller 700), the first current compensation value Iref_b0 output from the current compensation value calculator 771 is multiplied by a constant gain Gi = k (for example, k = 1) to calculate the second current compensation value Iref_b.

The second current compensation value Iref_b output from the friction compensator 770 is added to the first turning motor current command value Iref_a output from the stabilization compensator 740 by the adder 750 illustrated in FIG. 4, and output limitation is performed by the output limiter 760 on the current command value Iref_c obtained by the addition, thereby outputting the second turning motor current command value It_ref.

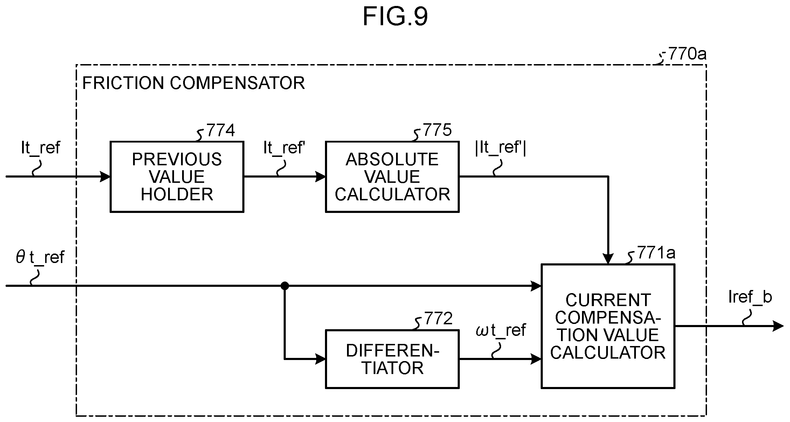

FIG. 9 is a block diagram illustrating a configuration example of a friction compensator according to a modification. In a configuration example of a friction compensator 770a illustrated in FIG. 5, the first current compensation value Iref_b0 output from the current compensation value calculator 771 is multiplied by the gain Gi generated by the current sensitive gain generator 773. In the modification illustrated in FIG. 9, a current compensation value calculator 771a holds a table (data) in which the second turning motor current command value It_ref (the previous output value |It_ref'| of the steered angle controller 700) and the coefficient Ahys in the above Expressions (6) to (13) are associated with each other, and obtains, as illustrated in FIG. 8, a characteristic in which the output width of the hysteresis characteristic (the width of the second current compensation value Iref_b) increases or decreases depending on the second turning motor current command value It_ref. The data can be stored in, for example, the ROM of the ECU constituting the control device 50, similarly to the current sensitive gain map. Thus, similarly to the configuration illustrated in FIG. 5, friction compensation control based on the frictional force caused by the gear torque can be implemented.

The embodiment is not limited to one in which the steered angle target value θt_ref is differentiated to obtain the turning speed target value ωt_ref, and may be an embodiment in which it is determined, using the motor angular velocity of the turning motor 41, that the turning direction has been switched, for example. A filter may be provided in a preceding stage of the current compensation value calculator 771 and the current sensitive gain generator 773, or a filter may be provided in a subsequent stage of the current sensitive gain generator 773. A limiter that performs output limitation processing on the second current compensation value Iref_b may be provided at a subsequent stage of the friction compensator 770, similarly to the output limiter 760 described above.

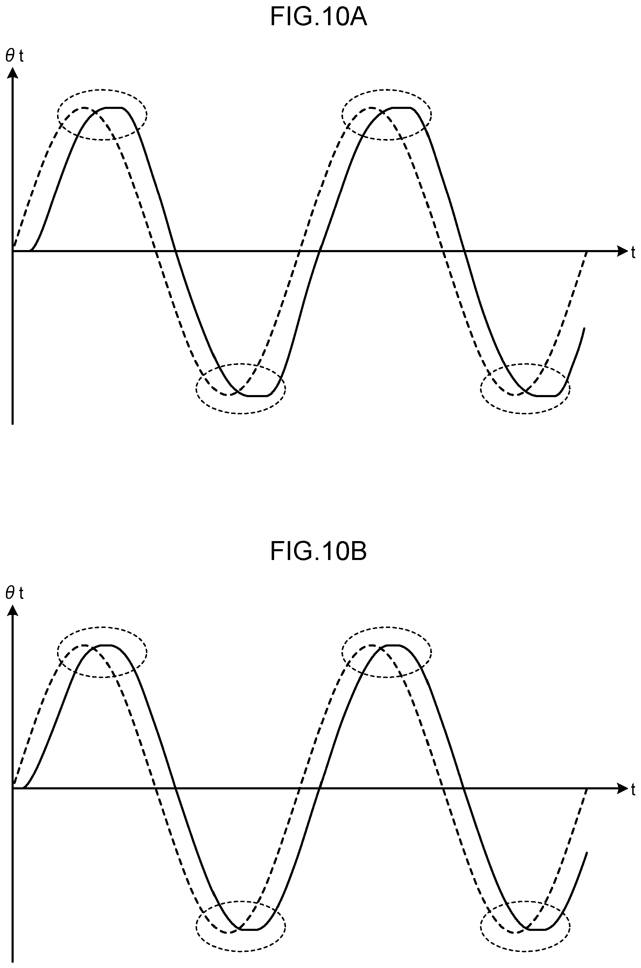

FIGS. 10A and 10B are first conceptual graphs for describing a specific example of friction compensation control by the friction compensator. In FIGS. 10A and 10B, the horizontal axis represents time, and the vertical axis represents the steered angle. The broken line illustrated in FIGS. 10A and 10B indicates the steered angle target value θt_ref, and the solid line indicates the actual steered angle θt_act. FIG. 10A illustrates a time response in a case where friction compensation control by the friction compensator 770 is not performed. FIG. 10B illustrates a time response in a case where friction compensation control by the friction compensator 770 is performed.

FIGS. 10A and 10B each illustrate the example in which the time response in a case where turning left and right is performed at a relatively fast predetermined frequency from the center position of the steered wheels 5L and 5R. In a case where the friction compensation control by the friction compensator 770 is not performed, distortion occurs in the actual steered angle θt_act at the time of switching the turning direction surrounded by a broken line as illustrated in FIG. 10A. In this case, in switching of the steering direction from turning increase to turning back of the steering wheel operation by the driver or switching from the turning back to the turning increase, there is a possibility that a deviation occurs between the operation (steering) of the steering wheel 1 and the turning of the steered wheels 5L and 5R, and the driver feels uncomfortable. On the other hand, in a case where the friction compensation control is performed by the friction compensator 770, as illustrated in FIG. 10B, the occurrence of distortion in the actual steered angle θt_act at the time of switching the turning direction surrounded by the broken line is inhibited.

More specifically, when the steered angle target value θt_ref is changed at the time of switching the turning direction, the turning speed target value ωt_ref becomes substantially zero, but since the first current compensation value Iref_b0 is determined based on the steered angle target value θt_ref, the friction compensator 770 can perform predetermined friction compensation control even when the turning speed target value ωt_ref is substantially zero.

Thus, it is possible to reduce the sense of discomfort given to the driver in switching of the steering direction from turning increase to turning back of the steering wheel operation by the driver or switching from the turning back to the turning increase.

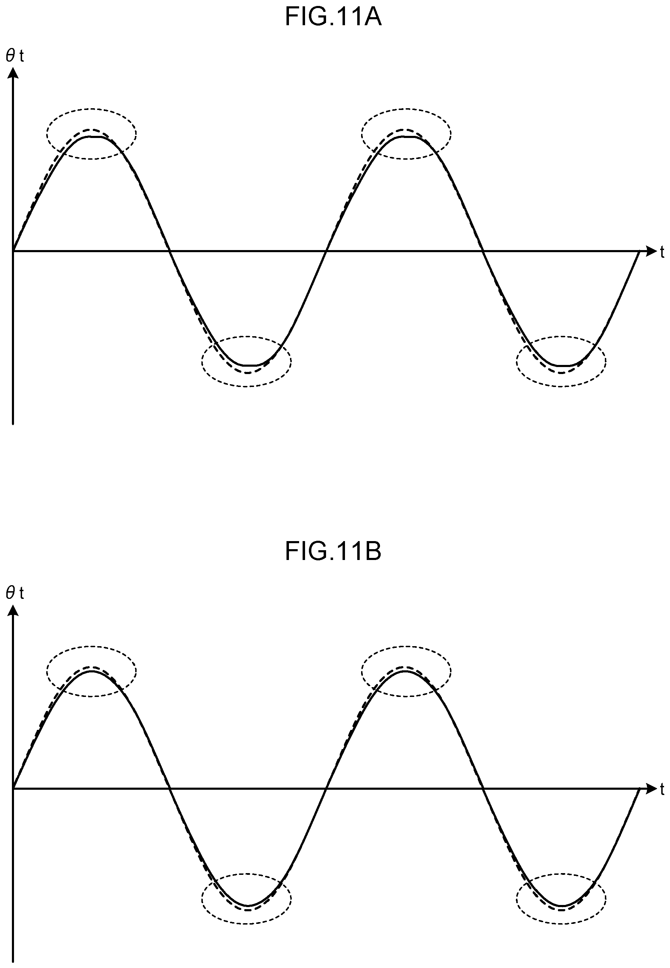

FIGS. 11A and 11B are second conceptual graphs for describing a specific example of friction compensation control by the friction compensator. In FIGS. 11A and 11B, the horizontal axis represents time, and the vertical axis represents the steered angle. The broken line illustrated in FIGS. 11A and 11B indicates the steered angle target value θt_ref, and the solid line indicates the actual steered angle θt_act. FIG. 11A illustrates a time response in a case where friction compensation control based on the turning speed target value ωt_ref is performed as a comparative example of the friction compensation control according to the embodiment. FIG. 11B illustrates a time response in a case where friction compensation control is performed by the friction compensator 770.

FIGS. 11A and 11B each illustrate the example of the time response in a case where turning left and right by a slightly smaller amount than that in FIGS. 10A and 10B. In a case where the friction compensation control based on the turning speed target value ωt_ref according to the comparative example is applied, when slight left-and-right turning is performed, distortion in the actual steered angle θt_act occurs at the time of switching the turning direction, as enclosed by broken lines illustrated in FIG. 11A. On the other hand, in a case where the friction compensation control by the friction compensator 770 is applied, even when slight left-and-right turning is performed, it is possible to inhibit the occurrence of distortion in the actual steered angle θt_act at the time of switching the turning direction, as enclosed by broken lines illustrated in FIG. 11B.

More specifically, in a case where the steering wheel is operated slowly, slightly, and slowly, when the steered angle target value θt_ref is switched at the time of switching the turning direction as in the examples of FIGS. 10A and 10B, the turning speed target value ωt_ref becomes substantially zero. Here, unlike the examples of FIGS. 10A and 10B, since the steered angle target value θt_ref is also a value close to zero, the first current compensation value Iref_b0 output from the current compensation value calculator 771 is also a small value, but by multiplying the first current compensation value Iref_b0 by the gain Gi calculated by the current sensitive gain generator 773, it is possible to prevent the second current compensation value Iref_b from becoming too small.

Thus, even in a situation where the steering wheel operation by the driver is slight, it is possible to reduce the sense of discomfort given to the driver in switching of the steering direction from turning increase to turning back of the steering wheel operation by the driver or switching from the turning back to the turning increase.

As described above, the steered angle controller 700 includes the friction compensator 770, and is configured to calculate the second current compensation value Iref_b for compensating for the following delay of the actual steered angle θt_act with respect to the steered angle target value θt_ref caused by friction in the turning mechanism, based on the steered angle target value θt_ref. With this configuration, the friction compensation control can be effectively and appropriately performed regardless of the steering wheel operation speed of the driver.

Furthermore, as described above, by setting the second current compensation value Iref_b to have a characteristic of increasing or decreasing depending on the second turning motor current command value It_ref, friction compensation control based on the frictional force caused by the gear torque can be implemented.

(First embodiment)

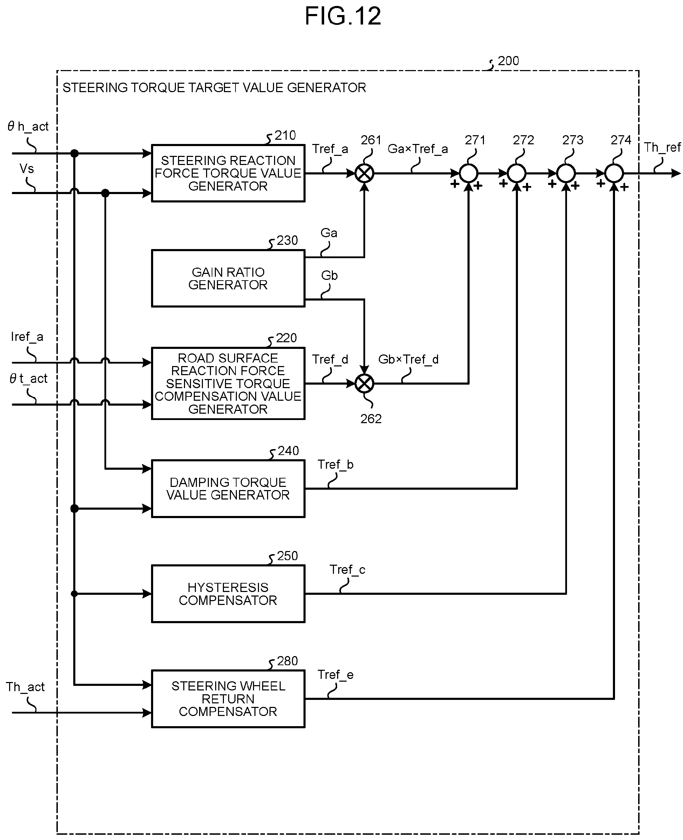

Hereinafter, the steering torque target value generator 200 according to the first embodiment will be described. FIG. 12 is a block diagram illustrating a configuration example of a steering torque target value generator according to the first embodiment. As illustrated in FIG. 12, the steering torque target value generator 200 according to the first embodiment includes a steering reaction force torque value generator 210, a road surface reaction force sensitive torque compensation value generator 220, a gain ratio generator 230, a damping torque value generator 240, a hysteresis compensator 250, and a steering wheel return compensator 280 as main components.

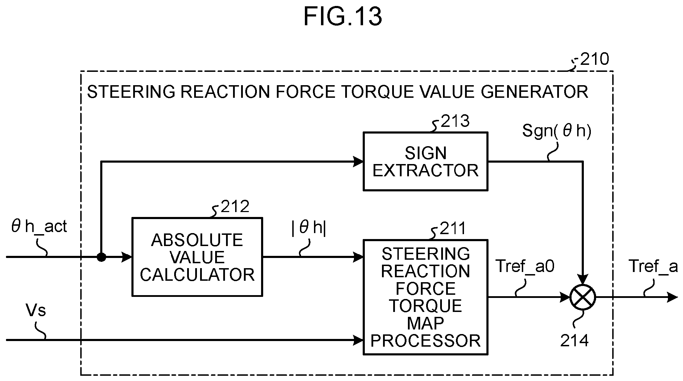

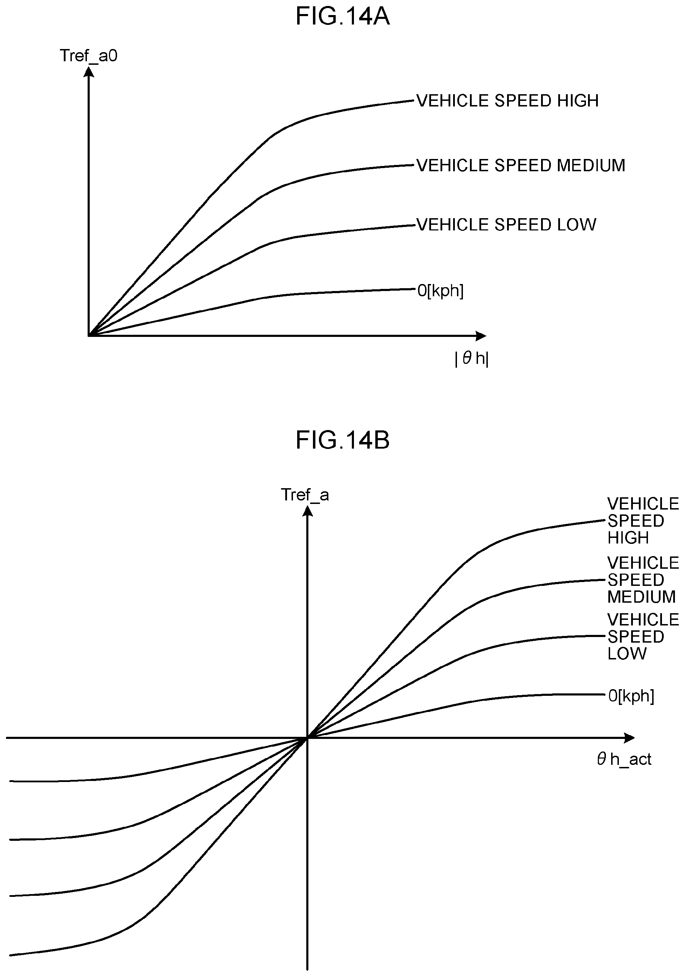

First, the steering reaction force torque value generator 210 will be described with reference to FIGS. 13, 14A, and 14B. FIG. 13 is a block diagram illustrating a configuration example of the steering reaction force torque value generator.

In the present disclosure, a sign extractor 213 illustrated in FIG. 13 extracts the sign of the actual steering angle θh_act. Specifically, for example, the value of the actual steering angle θh_a is divided by the absolute value of the actual steering angle θh_a. Accordingly, the sign extractor 213 outputs "1" when the sign of the actual steering angle θh_act is "+", and outputs "-1" when the sign of the actual steering angle θh_act is "-". Specifically, the sign extractor 213 generates, for example, a sign function Sgn (θh) of the actual steering angle θh_act.

FIG. 14A is a line graph illustrating a characteristic example of a basic map. A steering angle |θh| subjected to absolute value processing in an absolute value calculator 212 and the vehicle speed Vs are input to a steering reaction force torque map processor 211. The steering reaction force torque value generator 210 generates a torque value Tref_a0 with the vehicle speed Vs as a parameter, using the basic map illustrated in FIG. 14A. The torque value Tref_a0 is used to generate a basic steering reaction force based on the steering angle |θh| and the vehicle speed Vs.

The torque value Tref_a0 has an angle sensitive characteristic of increasing or decreasing depending on the steering angle |θh|. More specifically, as illustrated in FIG. 14A, the torque value Tref_a0 increases as the steering angle |θh| increases. The torque value Tref_a0 has a vehicle speed sensitive characteristic of increasing or decreasing depending on the vehicle speed Vs. More specifically, as illustrated in FIG. 14A, the torque value Tref_a0 increases as the vehicle speed Vs increases. That is, the reaction force obtained by the torque value Tref_a0 derived by the basic map illustrated in FIG. 14A increases as the operation amount (steering angle θh) of the steering wheel 1 by the driver increases, and increases as the speed of the vehicle (vehicle speed Vs) increases. The basic map illustrated in FIG. 14A has a vehicle speed sensitive characteristic, but is not limited thereto.

FIG. 14B is a line graph illustrating a characteristic example of the torque value Tref_a. The torque value Tref_a (first torque value) illustrated in FIG. 14B is obtained by multiplying, in a multiplier 293, the torque value Tref_a0 output from the steering reaction force torque map processor 211 by the sign function Sgn (θh) output from the sign extractor 213. A configuration may be employed in which the sign extractor 213 is not provided, and the torque value Tref_a (first torque value) is obtained using a basic map corresponding to the positive and negative steering angles θh as illustrated in FIG. 14B.

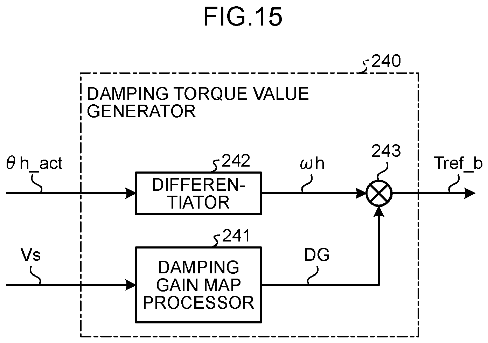

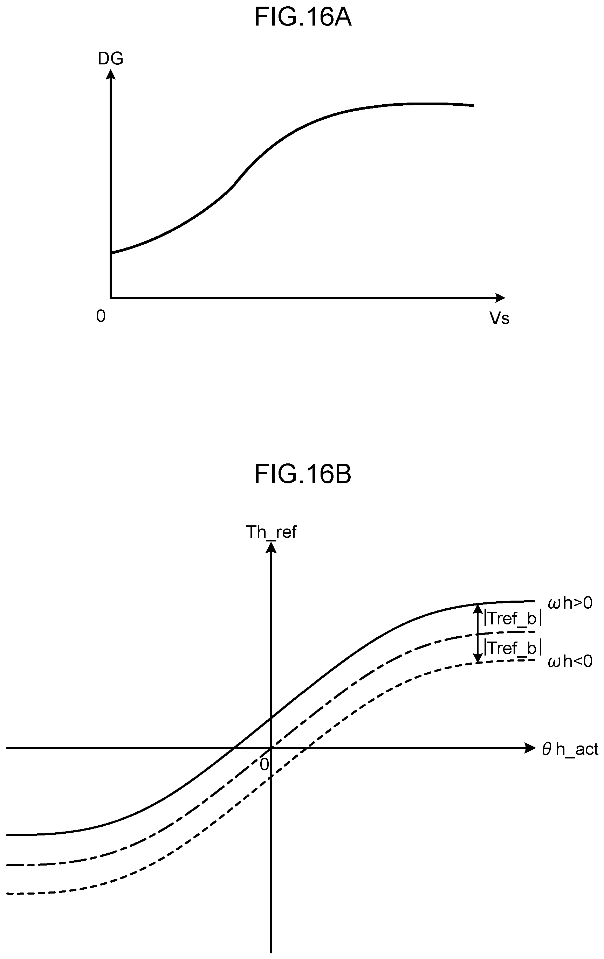

Next, the damping torque value generator 240 will be described with reference to FIGS. 15, 16A, and 16B. FIG. 15 is a block diagram illustrating a configuration example of a damping torque value generator according to the first embodiment.

The damping torque value generator 240 includes a damping gain map processor 241, a differentiator 242, and a multiplier 243. FIG. 16A is a graph illustrating a characteristic example of a damping gain map. The vehicle speed Vs is input to the damping gain map processor 241. The damping gain map processor 241 generates a damping gain DG using the damping gain map illustrated in FIG. 16A.

As illustrated in FIG. 16A, the damping gain DG has a vehicle speed sensitive characteristic of increasing or decreasing depending on the vehicle speed Vs. In the damping torque value generator 240, the multiplier 243 multiplies an angular velocity of the steering wheel 1 (hereinafter also referred to as a "steering angular velocity ωh"), which has been calculated by differentiating the steering angle θh in the differentiator 242, by the damper gain DG output from the damping gain map processor 241, and outputs the result as a torque value Tref_b.

By adding the torque value Tref_b output from the damping torque value generator 240 to the torque value Tref_a (first torque value) output from the steering reaction force torque value generator 210, it is possible to compensate for the steering reaction force proportional to the steering angular velocity ωh.

FIG. 16B is a conceptual graph illustrating a characteristic example of a torque value Tref_a+Tref_b. In FIG. 16B, a solid line indicates the torque value Tref_a+Tref_b when the steering angular velocity ωh is a positive value (ωh > 0), and a broken line indicates the torque value Tref_a+Tref_b when the steering angular velocity ωh is a negative value (ωh < 0). In FIG. 16B, an alternate long and short dash line indicates the torque value Tref_a (first torque value).

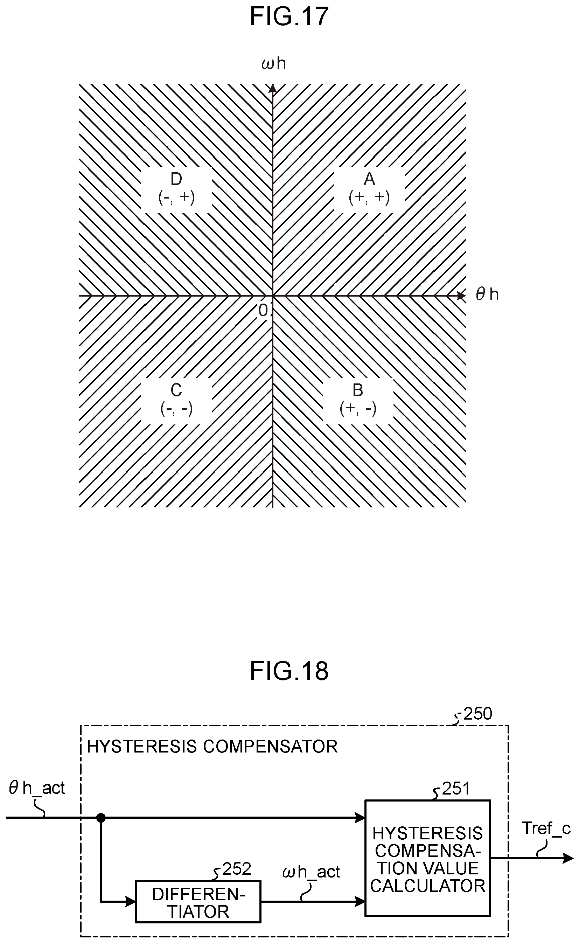

FIG. 17 is a region diagram for describing a steering direction in the present disclosure. In FIG. 17, the horizontal axis represents the steering angle θh, and the vertical axis represents the steering angular velocity ωh.

A region A((θh, ωh) = (+, +)) illustrated in FIG. 17 indicates that the steering wheel 1 is further turned rightward (ωh > 0) from a state of being already turned rightward (θh > 0). A region B((θh, ωh) = (+, -)) illustrated in FIG. 17 indicates that the steering wheel 1 is turned back to the left (ωh < 0) from a state of being turned rightward (θh > 0). A region C((θh, ωh) = (-, -)) illustrated in FIG. 17 indicates that the steering wheel 1 is further turned leftward (ωh < 0) from a state of being already turned leftward (θh < 0). A region D((θh, ωh) = (-, +)) illustrated in FIG. 17 indicates that the steering wheel 1 is turned back to the right (ωh > 0) from a state of being turned leftward (θh < 0). In FIG. 17, being on the steering angle θh axis (ωh = 0) indicates that the steering wheel 1 is neither turned further nor turned back ((θh, ωh) = (θh, 0)), and being on the steering angular velocity ωh axis (θh = 0) indicates that the steering wheel 1 is at the center position ((θh, ωh) = (0, ωh)).

The torque value Tref_b output from the damping torque value generator 240 is a positive value in the regions A and D where the steering angular velocity ωh > 0, and a negative value in the regions B and C where the steering angular velocity ωh < 0. Thus, in a case where the steering angular velocity ωh > 0, that is, in the region A where the steering wheel 1 is further turned rightward from a state where the steering wheel 1 is already turned rightward (θh > 0), or in the region D where the steering wheel 1 is turned back to the right from a state where the steering wheel 1 is turned leftward (θh < 0), the torque value becomes a value obtained by adding |Tref_b| to Tref_a as indicated by a solid line in FIG. 16B. In a case where the steering angular velocity ωh < 0, that is, in the region B where the steering wheel 1 is turned back to the left from a state where the steering wheel 1 is turned rightward (θh > 0), or in the region C where the steering wheel 1 is further turned leftward from a state where the steering wheel 1 is already turned leftward (θh < 0), the torque value becomes a value obtained by subtracting |Tref_b| from Tref_a as indicated by a broken line in FIG. 16B.

As illustrated in FIG. 16B, the torque value Tref_a+Tref_b is a value such that, as the steering angle θh increases and approaches the steering end limited by the stopper (rotation limiting mechanism) 35, the increment of the torque rise with respect to the change in the steering angle θ decreases. In other words, the torque value Tref_a+Tref_b has a characteristic that the change rate gradually decreases as the steering angle θh increases.

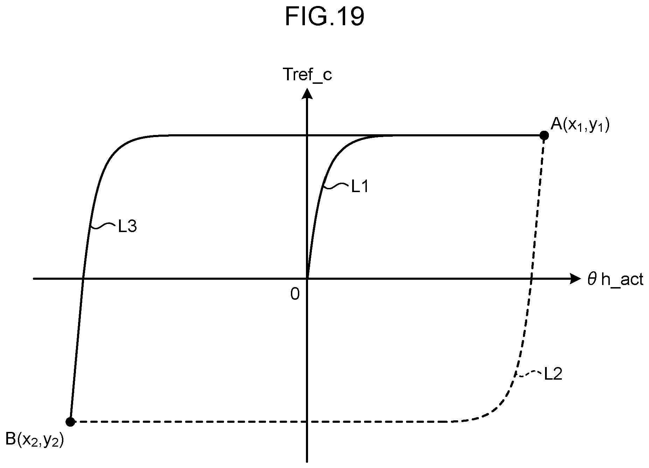

Next, the hysteresis compensator 250 will be described with reference to FIGS. 18 and 19. FIG. 18 is a block diagram illustrating a configuration example of the hysteresis compensator.

A steering angular velocity ωh_act calculated by differentiating the actual steering angle θh_act and the actual steering angle θh_act by a differentiator 252 is input to a hysteresis compensation value calculator 251. The hysteresis compensation value calculator 251 calculates a torque compensation value Tref_c based on the actual steering angle $\theta h\_act$ and the steering angular velocity $\omega h\_act$. The following describes a calculation method of the torque compensation value Tref_c in the hysteresis compensation value calculator 251.

FIG. 19 is a line graph illustrating an example of output characteristics of the hysteresis compensator. In FIG. 19, the horizontal axis represents the actual steering angle $\theta h\_act$, and the vertical axis represents the torque compensation value Tref_c. In FIG. 19, a solid line indicates the torque compensation value Tref_c at the time of rightward steering, and a broken line indicates the torque compensation value Tref_c at the time of leftward steering. As illustrated in FIG. 19, the torque compensation value Tref_c calculated by the hysteresis compensation value calculator 251 has hysteresis characteristics that differ between when steering to left and when steering to left. L1 illustrated in FIG. 19 represents a locus when rightward steering is performed from the center position (origin (0,0)) of the steering wheel 1, L2 represents a locus when switching from rightward steering to leftward steering occurs at coordinates $A(x_1,y_1)$, and L3 represents a locus when switching from rightward steering to leftward steering occurs at coordinates $B(x_2,y_2)$.

The hysteresis compensation value calculator 251 calculates the torque compensation value Tref_c using the following Expressions (9) and (10) based on the actual steering angle $\theta h\_act$ and the steering angular velocity $\omega h\_act$. Specifically, when the sign $\omega h\_act(sgn)$ of the steering angular velocity $\omega h\_act$ is a positive value ("+"), the torque compensation value Tref_c is calculated using the following Expression (9), and when the sign $\omega h\_act(sgn)$ of the steering angular velocity $\omega h\_act$ is a negative value ("-"), the torque compensation value Tref_c is calculated using the following Expression (10). In the following Expressions (9) and (10), x is the steering angular velocity $\omega h\_act$, $y_R$ is the torque compensation value Tref_c at the time of rightward steering, and $y_L$ is the torque compensation value Tref_c at the time of leftward steering. The coefficient a is a value larger than 1, and the coefficient c is a value larger than 0. A coefficient Ahys indicates an output width of the hysteresis characteristic (a width of the torque compensation value Tref_c), and the coefficient c is a coefficient representing roundness of the hysteresis characteristic.

$$y_R = Ahys\{1 - a^{-c(x-b)}\} \qquad\qquad (9)$$

$$y_L = -Ahys\{1 - a^{c(x-b')}\} \qquad\qquad (10)$$

That is, the hysteresis compensation value calculator 251 calculates the torque compensation value Tref_c($y_R$) using the above Expression (9) at the time of rightward steering ($\omega h\_act(sgn)$ = "+"), and calculates the torque compensation value Tref_c($y_L$) using the above Expression (10) at the time of leftward steering ($\omega h\_act(sgn)$ = "-").

When switching from the rightward steering to the leftward steering occurs ($\omega h\_act(sgn)$ = "+" → "-") or when switching from the leftward steering to the rightward steering occurs ($\omega h\_act(sgn)$ = "-" → "+"), the hysteresis compensation value calculator 251 uses the previous values of the actual steering angle $\theta h\_act$ and the torque compensation value Tref_c and substitutes a coefficient b or b' expressed by the following Expression (11) or (12) into the above Expression (9) or (10) applied after the steering switching. This maintains continuity before and after steering switching. Specifically, when the switching from the rightward steering to the leftward steering occurs ($\omega h\_act(sgn)$ = "+" → "-"), the hysteresis compensation value calculator 251 applies the previous values (coordinates $A(x_1,y_1)$ illustrated in FIG. 19) of the actual steering angle $\theta h\_act$ and the torque compensation value Tref_c to the above Expression (10), and calculates the torque compensation value Tref_c by substituting the coefficient b' expressed by the following Expression (12). When the switching from the leftward steering to the rightward steering occurs ($\omega h\_act(sgn)$ = "-" → "+"), the hysteresis compensation value calculator 251 applies the previous values (coordinates $B(x_2,y_2)$ illustrated in FIG. 19) of the actual steering angle $\theta h\_act$ and the torque compensation value Tref_c to the above Expression (9), and substitutes the coefficient b expressed by the following Expression (11) to calculate the torque compensation value Tref_c.

$$b = x_1 + (1/c)\log_a\{1 - (y_1/Ahys)\} \qquad\qquad (11)$$

$$b' = x_1 - (1/c)\log_a\{1 - (y_1/Ahys)\} \qquad\qquad (12)$$

The above Expressions (11) and (12) can be derived by substituting $x_1$ for x and substituting $y_1$ for $y_R$ and $y_L$ in the above Expressions (9) and (10).

For example, in a case where the Napier's constant e is used as the coefficient a, the above Expressions (9), (10), (11), and (12) can be expressed by the following Expressions (13), (14), (15), and (16), respectively.

$$y_R = Ahys[1-exp\{-c(x-b)\}] \qquad\qquad (13)$$

$$y_L = -Ahys[\{1-exp\{c(x-b')\}] \qquad\qquad (14)$$

$$b = x_1 + (1/c)\log_e\{1-(y_1/Ahys)\} \qquad\qquad (15)$$

$$b' = x_1 - (1/c)\log_e\{1-(y_1/Ahys)\} \qquad\qquad (16)$$

As described above, the SBW system does not include an intermediate shaft that is mechanically coupled to the column shaft 2. That is, the steering mechanism and the turning mechanism are mechanically separated. For this reason, it is necessary to transmit, for example, an oversteer state or an understeer state when the vehicle travels on a low μ road where frictional resistance of the road surface is significantly reduced due to a frozen road surface, a hydroplaning phenomenon in rainy weather, or the like to the reaction force device 30 as a steering reaction force.

In the present disclosure, as illustrated in FIG. 12, a road surface reaction force sensitive torque compensation value generator 220 is provided as a component of the steering torque target value generator 200, a road surface reaction force torque depending on the first turning motor current command value Iref_a generated by the steered angle controller 700 is estimated, and a torque value (second torque value) based on the estimated road surface reaction force torque is applied to the steering torque target value Th_ref. Thus, a steering reaction force corresponding to the estimation value of the road surface reaction force torque can be given to the steering wheel 1. Hereinafter, a configuration and an operation capable of giving a steering reaction force corresponding to an estimation value of a road surface reaction force torque to the steering wheel 1 will be described in detail.

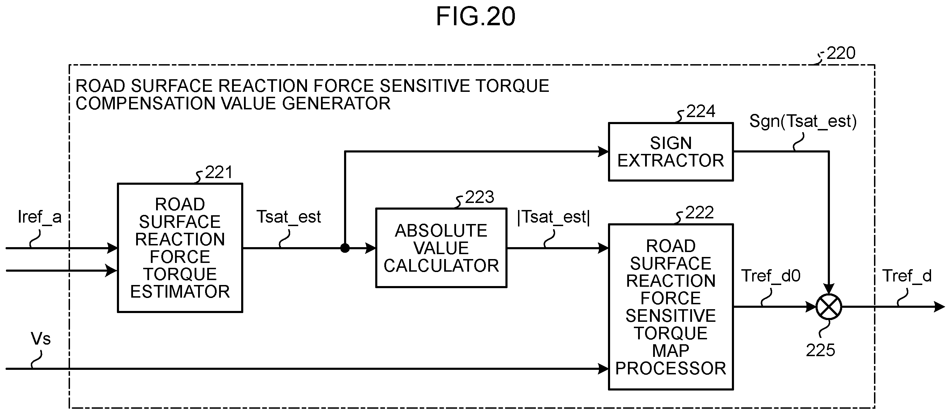

FIG. 20 is a block diagram illustrating a configuration example of a road surface reaction force sensitive torque compensation value generator. The road surface reaction force sensitive torque compensation value generator 220 includes a road surface reaction force torque estimator 221 and a road surface reaction force sensitive torque map processor 222 as main components.

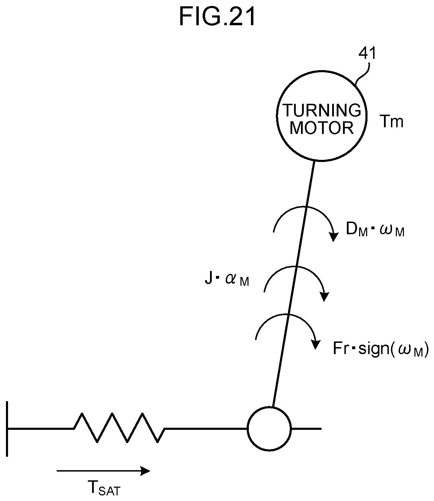

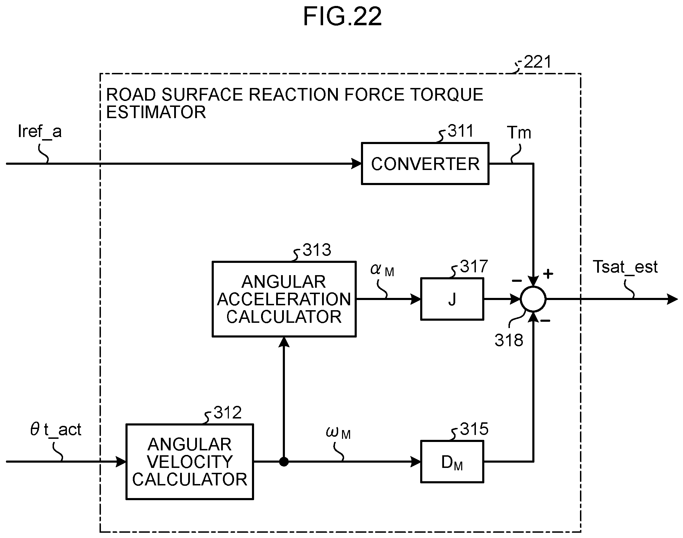

Here, first, an estimation method of a road surface reaction force torque estimation value Tsat_est performed by the road surface reaction force torque estimator 221 will be described with reference to FIGS. 21 and 22.

FIG. 21 is a schematic diagram illustrating a state of torque generated between the road surface and the turning motor.

The steered angle target value θt_ref is generated when the driver steers the steering wheel, and the turning motor 41 generates a turning motor torque Tm for steering the steered wheels 5L and 5R based on the steered angle target value θt_ref. As a result, the steered wheels 5L and 5R are steered, and a road surface reaction force torque $T_{SAT}$ is generated. At this time, a torque serving as resistance is generated by inertia (pinion shaft conversion inertia) J acting on the pinion shaft by (the rotor of) the turning motor 41, the deceleration mechanism, and the like. Furthermore, a physical torque (viscous torque) expressed as a damper term (damper coefficient $D_M$) is generated by the rotational speed of the turning motor 41. From the balance of these forces, an equation of motion expressed by the following Expression (17) is obtained.

$$J\times\alpha_M + D_M\times\omega_M = Tm - T_{SAT} \qquad\qquad (17)$$

In the above Expression (17), $\omega_M$ is a motor angular velocity subjected to a pinion shaft conversion (converted into a value with respect to the pinion shaft), and $\alpha_M$ is a motor angular acceleration subjected to the pinion shaft conversion. Then, the following Expression (18) is obtained by solving the above Expression (17) for the road surface reaction force torque $T_{SAT}$.

$$T_{SAT} = Tm - J\times\alpha_M - D_M\times\omega_M \qquad\qquad (18)$$

As can be seen from the above Expression (18), the road surface reaction force torque $T_{SAT}$ can be calculated from the motor angular velocity $\omega_M$, the motor angular acceleration $\alpha_M$, and the turning motor torque Tm by obtaining the pinion shaft conversion inertia J and the damper coefficient $D_M$ as constants in advance. The pinion shaft conversion inertia J may be a value that is subjected to pinion shaft conversion simply using a relational expression between the motor inertia and the reduction ratio.

The first turning motor current command value Iref_a and the actual steered angle θt_act generated by the steered angle controller 700 are input to the road surface reaction force torque estimator 221. The road surface reaction force torque estimator 221 calculates the road surface reaction force torque estimation value Tsat_est by replacing the road surface reaction force torque $T_{SAT}$ of the above Expression (18) with the road surface reaction force torque estimation value Tsat_est.

FIG. 22 is a block diagram illustrating a configuration example of the road surface reaction force torque estimator. The road surface reaction force torque estimator 221 includes a converter 311, an angular velocity calculator 312, an angular acceleration calculator 313, a block 315, a block 317, and a subtracter 318.

The first turning motor current command value Iref_a is input to the converter 311. The converter 311 calculates the turning motor torque Tm subjected to the pinion shaft conversion by multiplying by a gear ratio and a torque constant determined in advance.

The actual steered angle θt_act is input to the angular velocity calculator 312. The angular velocity calculator 312 converts the actual steered angle θt_act into the angle of the turning motor 41, performs differential calculation processing on the angle of the turning motor 41, and further calculates the motor angular velocity $\omega_M$ subjected to the pinion shaft conversion by division by the gear ratio.

The motor angular velocity $\omega_M$ is input to the angular acceleration calculator 313. The angular acceleration calculator 313 differentiates the motor angular velocity $\omega_M$ and calculates the motor angular acceleration $\alpha_M$ subjected to the pinion shaft conversion.

Then, the road surface reaction force torque estimation value Tsat_est is calculated based on the above Expression (18) with the configuration illustrated in FIG. 22, using the turning motor torque Tm, the motor angular velocity $\omega_M$, and the motor angular acceleration $\alpha_M$.

The motor angular velocity $\omega_M$ output from the angular velocity calculator 312 is input to the block 315. The block 315 multiplies the input data by the damper coefficient $D_M$ and outputs the result.

The motor angular acceleration $\alpha_M$ output from the angular acceleration calculator 313 is input to the block 317. The block 317 multiplies the input data by the pinion shaft conversion inertia J and outputs the result.

The subtracter 318 subtracts the output of the block 317 and the output of the block 315 from the turning motor torque Tm output from the converter 311.

With the above configuration, the above Expression (18) can be implemented. That is, the road surface reaction force torque estimation value Tsat_est is calculated by the configuration of the road surface reaction force torque estimator 221 illustrated in FIG. 22.

In a mode of detecting the angle of the turning motor 41, the angular velocity calculator 312 performs differential calculation processing on the detected angle of the turning motor 41, and further calculates the motor angular velocity $\omega_M$ subjected to the pinion shaft conversion by division by the gear ratio. In a case where the column angle can be directly detected, the column angle may be used as angle information instead of the actual steered angle θt_act or the angle of the turning motor 41. In this case, the pinion shaft conversion is unnecessary. Instead of the actual steered angle θt_act or the angle of the turning motor 41, a signal obtained by subjecting the steering angular velocity or the turning motor angular velocity to the pinion shaft conversion may be input as the motor angular velocity $\omega_M$, and the differential processing with respect to the angle of the turning motor 41 may be omitted. The road surface reaction force torque estimation value Tsat_est may be calculated by a method other than the above, or an estimation value corresponding to the road surface reaction force torque estimation value Tsat_est may be used. The following describes a calculation method of the road surface reaction force torque estimation value Tsat_est different from the above method.

In the calculation method of the road surface reaction force torque estimation value Tsat_est different from the above method, the first turning motor current command value Iref_a generated by the steered angle controller 700 is input to the road surface reaction force torque estimator 221. A transfer function Gfil expressed by the following Expression (19) is set in the road surface reaction force torque estimator 221. The transfer function Gfil is stored in, for example, the ROM of the ECU constituting the control device 50.

$$\mathtt{Gfil=N(s)/D(s)=(Ds+E)/(As^2+Bs+C)} \qquad (19)$$

A, B, C, D, and E in a linear function N(s) = Ds + E and a quadratic function D(s) = As$^2$ + Bs + C in the above Expression (19) are coefficients set by the following simulation.

In the present disclosure, the transfer functions of the first order numerator and the second order denominator are assumed as the transfer function Gfil, but the orders of the numerator and denominator can be appropriately changed based on the allowable amount of error between an actual road surface reaction force torque Tsat_act and the road surface reaction force torque estimation value Tsat_est, the load of the ECU, and the like.

For example, in a case where the orders of the numerator and denominator are increased, the relationship between the first turning motor current command value) Iref_a and the actual road surface reaction force torque Tsat_act obtained by an experiment to be described later and the transfer characteristic of the transfer function Gfil can be favorably matched, so that the road surface reaction force torque estimation value Tsat_est close to the actual measured value can be estimated.

On the other hand, when the orders of the numerator and denominator are reduced, the load on the ECU can be reduced.

It is assumed that a relational expression expressed by the following Expression (20) is established between the road surface reaction force torque $T_{SAT}$ and the first turning motor current command value Iref_a. The road surface reaction force torque $T_{SAT}$ expressed by the following Expression (20) is set as the road surface reaction force torque estimation value Tsat_est in the present disclosure.

$$T_{SAT}=Gfil \times Iref\_a=Tsat\_est \qquad\qquad (20)$$

In other words, the transfer function Gfil calculates the road surface reaction force torque estimation value Tsat_est from the first turning motor current command value Iref_a by simulating the relationship between the first turning motor current command value Iref_a and the actual road surface reaction force torque Tsat_act, which are obtained by an experiment.

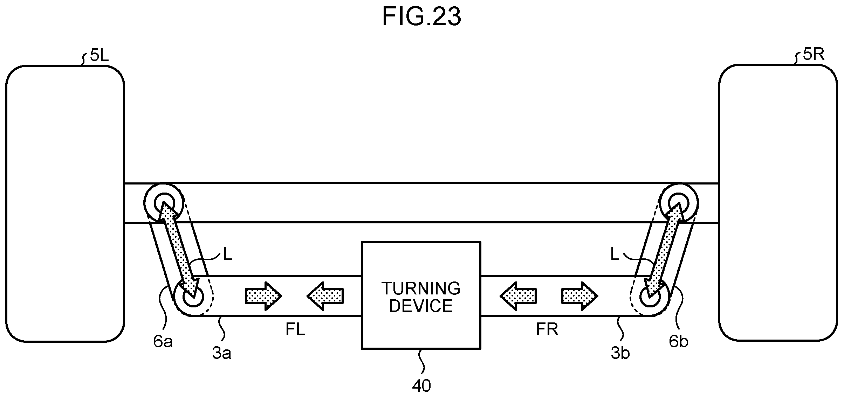

On the other hand, the actual road surface reaction force torque Tsat_act acting on the turning mechanism can be calculated from the axial force applied to the tie rod. FIG. 23 is a conceptual diagram for describing a method of calculating the actual road surface reaction force torque acting on the turning mechanism.

The actual road surface reaction force torque Tsat_act can be calculated by the following Expression (21) using axial forces FL and FR applied to the tie rods 3a and 3b and lengths L of arms 6a and 6b determined for each vehicle type.

$$Tsat\_act=FL \times L-FR \times L \qquad\qquad (21)$$

In the present disclosure, the actual road surface reaction force torque Tsat_act is calculated using the above Expression (21) using the axial forces FL and FR measured in advance by an experiment using an actual vehicle. The axial forces FL and FR can be measured, for example, by attaching force sensors to the tie rods 3a and 3b.

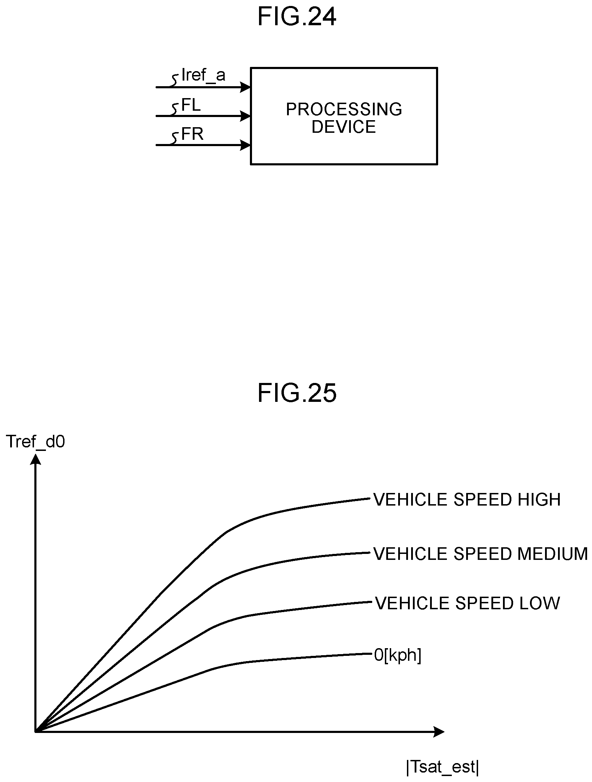

FIG. 24 is a conceptual diagram illustrating a configuration for executing a simulation for deriving the transfer function Gfil.

The first turning motor current command value Iref_a and the axial forces FL and FR are input to a processing device illustrated in FIG. 24. In the processing device, the transfer function Gfil is derived so that the road surface reaction force torque estimation value Tsat_est expressed by the above Expression (20) approximates the actual road surface reaction force torque Tsat_act calculated by the above Expression (21). As the processing device illustrated in FIG. 24, for example, a mode including a frequency characteristic analysis device (servo analyzer) is illustrated.

Specifically, the processing device executes curve fitting using a sweep method to derive the coefficients A, B, C, D, and E of the transfer function Gfil expressed by the above Expression (19). As an example of the curve fitting method, for example, a least square approximation method can be used. The curve fitting method is not limited to the least square approximation method.

The road surface reaction force torque estimator 221 performs filter processing on the first turning motor current command value Iref_a generated by the steered angle controller 700 using the transfer function Gfil derived as described above, and calculates the road surface reaction force torque estimation value Tsat_est expressed by the above Expression (20). Thus, the road surface reaction force torque estimation value Tsat_est corresponding to the behavior of the actual road surface reaction force torque Tsat_act when the vehicle actually travels is obtained.

The transfer function used when the road surface reaction force torque estimator 221 calculates the road surface reaction force torque estimation value Tsat_est is not limited to the above Expression (19). Specifically, for example, the present disclosure is not limited by the order of the function N(s) or the function D(s).

Returning back to FIG. 20, a sign extractor 224 extracts the sign of the road surface reaction force torque estimation value Tsat_est obtained by the above-described calculation method. Specifically, for example, the value of the road surface reaction force torque estimation value Tsat_est is divided by the absolute value of the road surface reaction force torque estimation value Tsat_est. Accordingly, the sign extractor 224 outputs "1" when the sign of the road surface reaction force torque estimation value Tsat_est is "+", and outputs "-1" when the sign of the road surface reaction force torque estimation value Tsat_est is "-". Specifically, the sign extractor 224 generates, for example, a sign function Sgn(Tsat_est) of the road surface reaction force torque estimation value Tsat_est.

FIG. 25 is a line graph illustrating a characteristic example of the road surface reaction force sensitive torque map. The road surface reaction force torque estimation value |Tsat_est| subjected to the absolute value processing in an absolute value calculator 223 and the vehicle speed Vs are input to the road surface reaction force sensitive torque map processor 222. The road surface reaction force sensitive torque map processor 222 generates a torque value Tref_d0 with the vehicle speed Vs as a parameter, using the road surface reaction force sensitive torque map illustrated in FIG. 25.

As illustrated in FIG. 25, the torque value Tref_d0 has a torque sensitive characteristic of increasing or decreasing depending on the road surface reaction force torque estimation value |Tsat_est|.

More specifically, the torque value Tref_d0 increases as the road surface reaction force torque estimation value | Tsat_est| increases, and the increase rate decreases as the road surface reaction force torque estimation value |Tsat_est| increases.

The torque value Tref_d0 has a vehicle speed sensitive characteristic of increasing or decreasing depending on the vehicle speed Vs. More specifically, the torque value Tref_d0 increases as the vehicle speed Vs increases as illustrated in FIG. 25.

That is, the reaction force obtained by the torque value Tref_d0 derived by the road surface reaction force sensitive torque map illustrated in FIG. 25 increases as the road surface reaction force torque estimation value |Tsat_est| increases, and increases as the speed (vehicle speed Vs) of the vehicle increases. The road surface reaction force sensitive torque map illustrated in FIG. 25 has the vehicle speed sensitive characteristic, but is not limited thereto.

The road surface reaction force sensitive torque compensation value generator 220 outputs a torque value Tref_d (second torque value) obtained by multiplying the torque value Tref_d0, which is an output value of the road surface reaction force sensitive torque map processor 222, by the sign function Sgn(Tsat_est) of the road surface reaction force torque estimation value Tsat_est in a multiplier 225 and performing sign conversion.

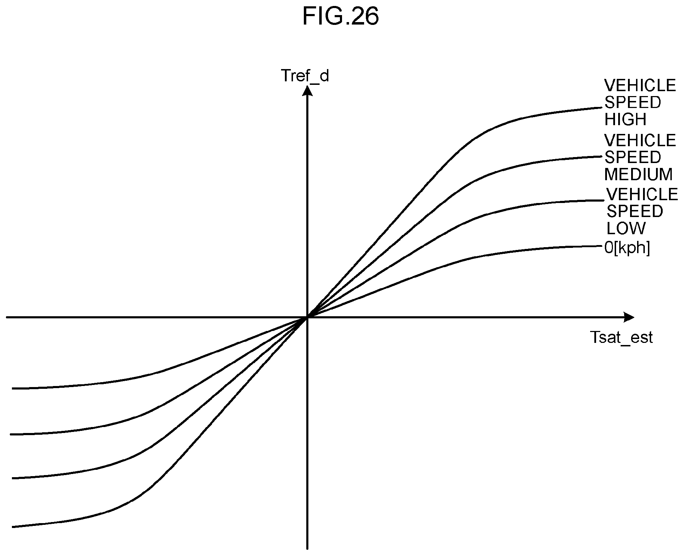

FIG. 26 is a line graph conceptually illustrating a characteristic example of the second torque value after the sign conversion. As illustrated in FIG. 26, the torque value Tref_d (second torque value) output from the road surface reaction force sensitive torque compensation value generator 220 increases or decreases depending on the road surface reaction force torque estimation value Tsat_est, which is an estimation value of the reaction force (self-aligning torque) acting from the road surface. By applying the torque value Tref_d (second torque value), which increases or decreases depending on the road surface reaction force torque estimation value Tsat_est, to the steering torque target value Th_ref, it is possible to obtain the steering reaction force corresponding to the road surface reaction force torque estimation value Tsat_est.

The characteristics of the road surface reaction force sensitive torque map are not limited to the characteristics illustrated in FIG. 25 or 26 described above. Furthermore, for example, instead of the map illustrated in FIG. 25 or 26, the characteristic may be defined by a predetermined transfer function.

In the present disclosure, the road surface reaction force sensitive torque compensation value generator 220 calculates the road surface reaction force torque estimation value Tsat_est depending on the first turning motor current command value Iref_a before adding the second current compensation value Iref_b output from the friction compensator 770, whereby the road surface reaction force torque estimation value Tsat_est depending on the behavior of the actual road surface reaction force torque Tsat_act during actual traveling of the vehicle can be obtained, and the steering reaction force corresponding to the road surface reaction force torque estimation value Tsat_est can be given.

When the steered angle controller 700 does not include the friction compensator 770, it is only required to estimate the road surface reaction force torque based on the second turning motor current command value It_ref, instead of the first turning motor current command value Iref_a.

Here, the road surface reaction force torque estimation value Tsat_est changes depending on the state of the vehicle such as the vehicle speed and the steering angle in addition to the condition of the road surface. For this reason, the condition of the road surface cannot be sufficiently reflected depending on the state of the vehicle, and the steering feeling corresponding to the condition of the road surface and the state of the vehicle may not be obtained.

In the present disclosure, the torque value Tref_a (first torque value) generated by the steering reaction force torque value generator 210 and the torque value Tref_d (second torque value) generated by the road surface reaction force sensitive torque compensation value generator 220 are multiplied by appropriate gains using the vehicle speed Vs, the actual steering angle θh_act, the actual steered angle θt_act, and the like as parameters (variables), thereby obtaining a steering feeling that reflects the condition of the road surface and the state of the vehicle. Specifically, the gain ratio generator 230 of the steering torque target value generator 200 according to the first embodiment controls the ratio (hereinafter, also simply referred to as a "gain ratio") between a first gain Ga to be multiplied by the torque value Tref_a (first torque value) and a second gain Gb to be multiplied by the torque value Tref_d (second torque value).

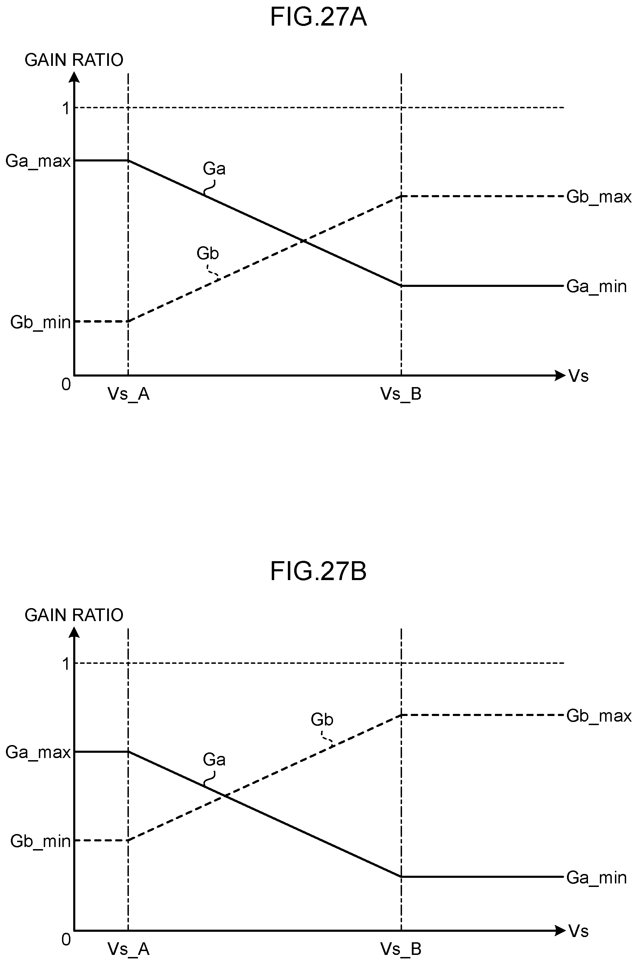

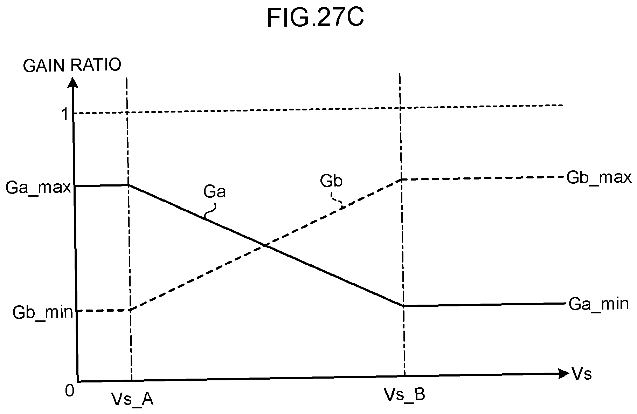

Hereinafter, a configuration and an operation according to the first embodiment capable of imparting a steering feeling corresponding to the condition of the road surface and the state of the vehicle will be described. FIG. 27A is a line graph conceptually illustrating a first example of a gain ratio setting example in a case where a vehicle speed is used as a parameter. FIG. 27B is a line graph conceptually illustrating a second example of a gain ratio setting example in a case where a vehicle speed is used as a parameter. FIG. 27C is a line graph conceptually illustrating a third example of a gain ratio setting example in a case where a vehicle speed is used as a parameter.

In the example illustrated in FIGS. 27A, 27B, and 27C, the vehicle speed Vs is input to the gain ratio generator 230. The gain ratio generator 230 generates the first gain Ga that increases or decreases depending on the vehicle speed Vs, and generates the second gain Gb such that the sum of the first gain Ga and the second gain Gb is 1. The first gain Ga is multiplied by the torque value Tref_a (first torque value) through a multiplier 261. The second gain Gb is multiplied by the torque value Tref_d (second torque value) through a multiplier 262.

The gain ratio generator 230 monotonically decreases the first gain Ga to be multiplied by the torque value Tref_a (first torque value) within a range from a first vehicle speed Vs_A to a second vehicle speed Vs_B. Accordingly, the second gain Gb to be multiplied by the torque value Tref_d (second torque value) monotonically increases within the range from the first vehicle speed Vs_A to the second vehicle speed Vs_B. The first vehicle speed Vs_A is, for example, 5 (km/h). The second vehicle speed Vs_B is, for example, 30 (km/h). The present disclosure is not limited by the values of the first vehicle speed Vs_A and the second vehicle speed Vs_B.

FIG. 27A illustrates an example in which a maximum value Ga_max of the first gain Ga in a range equal to or less than the first vehicle speed Vs_A is larger than a maximum value Gb_max of the second gain Gb in a range equal to or more than the second vehicle speed Vs_B. In this case, a minimum value Gb_min of the second gain Gb in the range equal to or less than the first vehicle speed Vs_A is larger than a minimum value Ga_min of the first gain Ga in the range equal to or more than the second vehicle speed Vs_B.

FIG. 27B illustrates an example in which the maximum value Ga_max of the first gain Ga in the range equal to or less than the first vehicle speed Vs_A is smaller than the maximum value Gb_max of the second gain Gb in the range equal to or more than the second vehicle speed Vs_B. In this case, the minimum value Gb_min of the second gain Gb in the range equal to or less than the first vehicle speed Vs_A is smaller than the minimum value Ga_min of the first gain Ga in the range equal to or more than the second vehicle speed Vs_B.

FIG. 27C illustrates an example in which the maximum value Ga_max of the first gain Ga in the range equal to or less than the first vehicle speed Vs_A is equal to the maximum value Gb_max of the second gain Gb in the range equal to or more than the second vehicle speed Vs_B. In this case, the minimum value Gb_min of the second gain Gb in the range equal to or less than the first vehicle speed Vs_A is equal to the minimum value Ga_min of the first gain Ga in the range equal to or more than the second vehicle speed Vs_B.

Respective values and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set based on the motion performance, vehicle specifications, and the like of the vehicle on which the control device 50 according to the present disclosure is mounted.

In the example illustrated in FIGS. 27A, 27B, and 27C, a steering reaction force corresponding to the road surface reaction force torque estimation value Tsat_est can be given to the steering wheel 1 at a ratio corresponding to the vehicle speed Vs. Specifically, in a range in which the vehicle speed Vs is relatively small, the steering torque target value generator 200 generates the steering torque target value Th_ref by multiplying the torque value Tref_a (first torque value) output from the steering reaction force torque value generator 210 by a relatively large first gain Ga, whereas in a range in which the vehicle speed Vs is relatively large, the steering torque target value generator 200 generates the steering torque target value Th_ref by multiplying the torque value Tref_d (second torque value) output from the road surface reaction force sensitive torque compensation value generator 220 by a relatively large second gain Gb. In a low-speed range in which the vehicle speed Vs is relatively small, the component of the reaction torque due to the elastic deformation of the tires is the main component of the road surface reaction force torque, and the proportion of the reaction torque component due to the road surface condition to the road surface reaction force torque is small. That is, when the output of the road surface reaction force sensitive torque compensation value generator 220 is relatively increased in the low-speed range, a heavy steering torque is given despite the road surface condition being difficult to obtain, so that the driver's steering feeling deteriorates. Thus, in the low-speed range in which the vehicle speed Vs is relatively small, the steering feeling that reflects the condition of the road surface and the vehicle speed Vs can be obtained by using the relatively large first gain Ga and the relatively small second gain Gb.

The gain ratio setting example that uses the vehicle speed Vs as a parameter is merely exemplary, and is not limited to the examples illustrated in FIGS. 27A, 27B, and 27C described above. For example, within the range from the first vehicle speed Vs_A to the second vehicle speed Vs_B, the first gain Ga to be multiplied by the torque value Tref_a (first torque value) may gradually decrease as the vehicle speed Vs increases, and accordingly, the second gain Gb to be multiplied by the torque value Tref_d (second torque value) may gradually increase as the vehicle speed Vs increases. For example, within the range from the first vehicle speed Vs_A to the second vehicle speed Vs_B, the first gain Ga to be multiplied by the torque value Tref_a (first torque value) may gradually increase as the vehicle speed Vs decreases, and accordingly, the second gain Gb to be multiplied by the torque value Tref_d (second torque value) may gradually decrease as the vehicle speed Vs decreases.

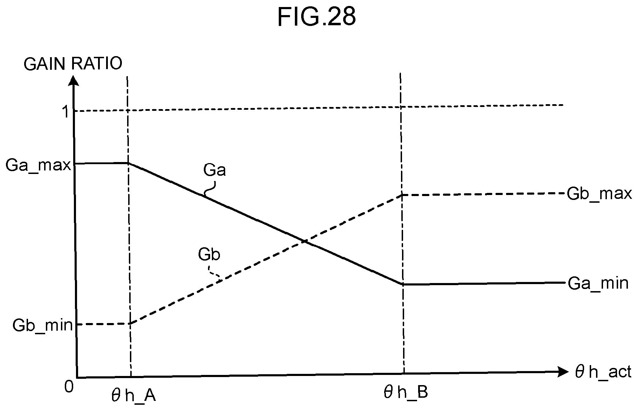

FIG. 28 is a line graph conceptually illustrating an example of a gain ratio setting example in a case where an actual steering angle is used as a parameter.

In the example illustrated in FIG. 28, the actual steering angle θh_act is input to the gain ratio generator 230. The gain ratio generator 230 generates the first gain Ga that increases or decreases depending on the actual steering angle θh_act, and generates the second gain Gb such that the sum of the first gain Ga and the second gain Gb is 1. The first gain Ga is multiplied by the torque value Tref_a (first torque value) by the multiplier 261. The second gain Gb is multiplied by the torque value Tref_d (second torque value) by the multiplier 262.

The gain ratio generator 230 monotonically decreases the first gain Ga to be multiplied by the torque value Tref_a (first torque value) within the range from the first steering angle θh_A to the second steering angle θh_B. Accordingly, the second gain Gb to be multiplied by the torque value Tref_d (second torque value) monotonically increases within the range from the first steering angle θh_A to the second steering angle θh_B. The first steering angle θh_A is, for example, 3 (deg). The second steering angle θh_B is, for example, 20 (deg). The present disclosure is not limited by the respective values of the first steering angle θh_A and the second steering angle θh_B.

FIG. 28 illustrates an example in which the maximum value Ga_max of the first gain Ga in a range equal to or less than the first steering angle θh_A is larger than the maximum value Gb_max of the second gain Gb in a range equal to or more than the second steering angle θh_B. In this case, the minimum value Gb_min of the second gain Gb in the range equal to or less than the first steering angle θh_A is larger than the minimum value Ga_min of the first gain Ga in the range equal to or more than the second steering angle θh_B.

The maximum value Ga_max of the first gain Ga in the range equal to or less than the first steering angle θh_A may be smaller than the maximum value Gb_max of the second gain Gb in the range equal to or more than the second steering angle θh_B, and the minimum value Gb_min of the second gain Gb in the range equal to or less than the first steering angle θh_A may be smaller than the minimum value Ga_min of the first gain Ga in the range equal to or more than the second steering angle θh_B.

The maximum value Ga_max of the first gain Ga in the range equal to or less than the first steering angle θh_A may be equal to the maximum value Gb_max of the second gain Gb in the range equal to or more than the second steering angle θh_B, and the minimum value Gb_min of the second gain Gb in the range equal to or less than the first steering angle θh_A may be equal to the minimum value Ga_min of the first gain Ga in the range equal to or more than the second steering angle θh_B.

Respective values and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set based on the motion performance, vehicle specifications, and the like of the vehicle on which the control device 50 according to the present disclosure is mounted.

In the example illustrated in FIG. 28, a steering reaction force corresponding to the road surface reaction force torque estimation value Tsat_est can be given to the steering wheel 1 at a ratio corresponding to the actual steering angle θh_act. Specifically, in a range in which the actual steering angle θh_act is relatively small, the steering torque target value generator 200 generates the steering torque target value Th_ref by multiplying the torque value Tref_a (first torque value) output from the steering reaction force torque value generator 210 by a relatively large first gain Ga, whereas in a range in which the actual steering angle θh_act is relatively large, the steering torque target value generator 200 generates the steering torque target value Th_ref by multiplying the torque value Tref_d (second torque value) output from the road surface reaction force sensitive torque compensation value generator 220 by a relatively large second gain Gb. Thus, it is possible to obtain a steering feeling that reflects the condition of the road surface and the actual steering angle θh_act.

The gain ratio setting example that uses the actual steering angle θh_act as a parameter is merely exemplary, and is not limited to the example illustrated in FIG. 28 described above. For example, within the range from the first steering angle θh_A to the second steering angle θh_B, the first gain Ga to be multiplied by the torque value Tref_a (first torque value) may gradually decrease as the actual steering angle θh_act increases, and accordingly, the second gain Gb to be multiplied by the torque value Tref_d (second torque value) may gradually increase as the actual steering angle θh_act increases. For example, within the range from the first steering angle θh_A to the second steering angle θh_B, the first gain Ga to be multiplied by the torque value Tref_a (first torque value) may gradually increase as the actual steering angle θh_act decreases, and accordingly, the second gain Gb to be multiplied by the torque value Tref_d (second torque value) may gradually decrease as the actual steering angle θh_act decreases.

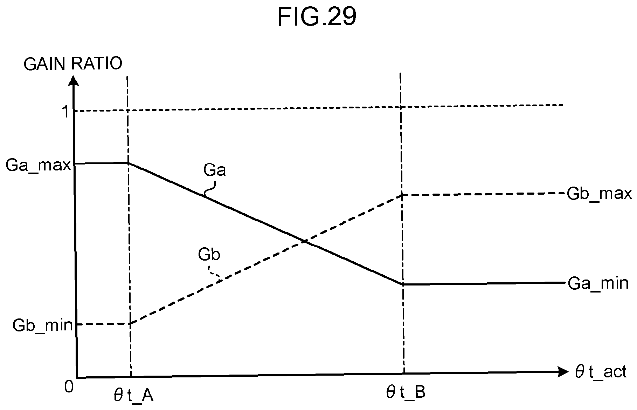

FIG. 29 is a line graph conceptually illustrating an example of a gain ratio setting example in a case where an actual steered angle is used as a parameter.

In the example illustrated in FIG. 29, the actual steered angle θt_act is input to the gain ratio generator 230. The gain ratio generator 230 generates the first gain Ga that increases or decreases depending on the actual steered angle θt_act, and generates the second gain Gb such that the sum of the first gain Ga and the second gain Gb is 1. The first gain Ga is multiplied by the torque value Tref_a (first torque value) by the multiplier 261. The second gain Gb is multiplied by the torque value Tref_d (second torque value) by the multiplier 262.

The gain ratio generator 230 monotonically decreases the first gain Ga to be multiplied by the torque value Tref_a (first torque value) within a range from the first steered angle θt_A to the second steered angle θt_B. Accordingly, the second gain Gb to be multiplied by the torque value Tref_d (second torque value) monotonically increases within the range from the first steered angle θt_A to the second steered angle θt_B. The first steered angle θt_A is, for example, 3 (deg). The second steered angle θt_B is, for example, 20 (deg). The present disclosure is not limited by the respective values of the first steered angle θt_A and the second steered angle θt_B.

FIG. 29 illustrates an example in which the maximum value Ga_max of the first gain Ga in a range equal to or less than the first steered angle θt_A is larger than the maximum value Gb_max of the second gain Gb in a range equal to or more than the second steered angle θt_B.In this case, the minimum value Gb_min of the second gain Gb in the range equal to or less than the first steered angle θt_A is larger than the minimum value Ga_min of the first gain Ga in the range equal to or more than the second steered angle θt_B.

The maximum value Ga_max of the first gain Ga in the range equal to or less than the first steered angle θt_A may be smaller than the maximum value Gb_max of the second gain Gb in the range equal to or more than the second steered angle θt_B, and the minimum value Gb_min of the second gain Gb in the range equal to or less than the first steered angle θt_A may be smaller than the minimum value Ga_min of the first gain Ga in the range equal to or more than the second steered angle θt_B.

The maximum value Ga_max of the first gain Ga in the range equal to or less than the first steered angle θt_A may be equal to the maximum value Gb_max of the second gain Gb in the range equal to or more than the second steered angle θt_B, and the minimum value Gb_min of the second gain Gb in the range equal to or less than the first steered angle θt_A may be equal to the minimum value Ga_min of the first gain Ga in the range equal to or more than the second steered angle θt_B.

Respective values and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set based on the motion performance, vehicle specifications, and the like of the vehicle on which the control device 50 according to the present disclosure is mounted.

In the example illustrated in FIG. 29, a steering reaction force corresponding to the road surface reaction force torque estimation value Tsat_est can be given to the steering wheel 1 at a ratio corresponding to the actual steered angle θt_act. Specifically, in a range in which the actual steered angle θt_act is relatively small, the steering torque target value generator 200 generates the steering torque target value Th_ref by multiplying the torque value Tref_a (first torque value) output from the steering reaction force torque value generator 210 by a relatively large first gain Ga, whereas in a range in which the actual steered angle θt_act is relatively large, the steering torque target value generator 200 generates the steering torque target value Th_ref by multiplying the torque value Tref_d (second torque value) output from the road surface reaction force sensitive torque compensation value generator 220 by a relatively large second gain Gb. Thus, it is possible to obtain a steering feeling that reflects the condition of the road surface and the actual steered angle θt_act.

The gain ratio setting example that uses the actual steered angle θt_act as a parameter is merely exemplary, and is not limited to the example illustrated in FIG. 29 described above. For example, within the range from the first steered angle θt_A to the second steered angle θt_B, the first gain Ga to be multiplied by the torque value Tref_a (first torque value) may gradually decrease as the actual steered angle θt_act increases, and accordingly, the second gain Gb to be multiplied by the torque value Tref_d (second torque value) may gradually increase as the actual steered angle θt_act increases. For example, within the range from the first steered angle θt_A to the second steered angle θt_B, the first gain Ga to be multiplied by the torque value Tref_a (first torque value) may gradually increase as the actual steered angle θt_act decreases, and accordingly, the second gain Gb to be multiplied by the torque value Tref_d (second torque value) may gradually decrease as the actual steered angle θt_act decreases.

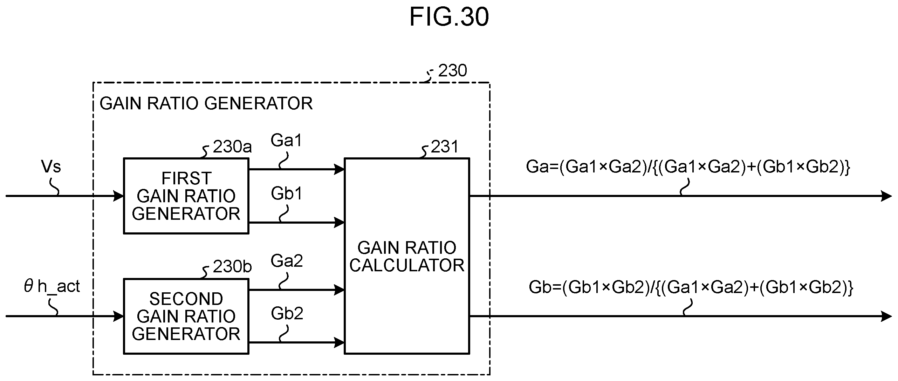

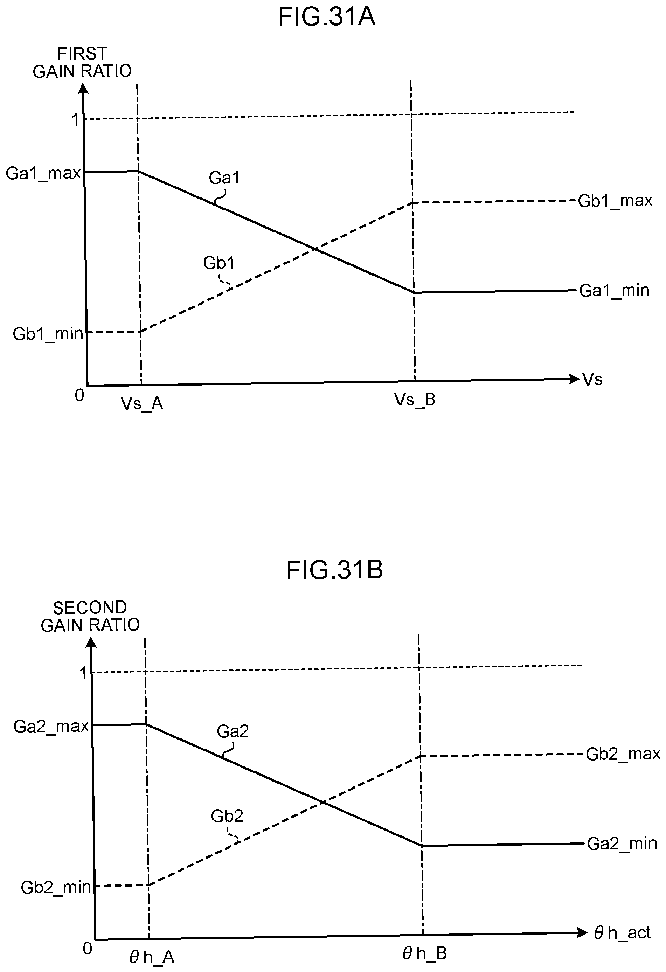

FIG. 30 is a block diagram illustrating a configuration example of a gain ratio generator in a case where a vehicle speed and an actual steering angle are used as parameters. FIG. 31A is a line graph conceptually illustrating an example of a gain ratio setting example using a vehicle speed as a parameter. FIG. 31B is a line graph conceptually illustrating an example of a gain ratio setting example in a case where an actual steering angle is used as a parameter.

In the configuration example illustrated in FIG. 30, the vehicle speed Vs and the actual steering angle θh_act are input to the gain ratio generator 230. In the example illustrated in FIG. 30, the gain ratio generator 230 includes a first gain ratio generator 230a, a second gain ratio generator 230b, and a gain ratio calculator 231.

The first gain ratio generator 230a generates a first gain Ga1 that increases or decreases depending on the vehicle speed Vs, and generates a second gain Gb1 such that the sum of the first gain Ga1 and the second gain Gb1 is 1.

The first gain ratio generator 230a monotonically decreases the first gain Ga1 within the range from the first vehicle speed Vs_A to the second vehicle speed Vs_B. Accordingly, the second gain Gb1 monotonically increases within the range from the first vehicle speed Vs_A to the second vehicle speed Vs_B. The first vehicle speed Vs_A is, for example, 5 (km/h). The second vehicle speed Vs_B is, for example, 30 (km/h). The present disclosure is not limited by the values of the first vehicle speed Vs_A and the second vehicle speed Vs_B.

FIG. 31A illustrates an example in which the maximum value Ga1_max of the first gain Ga1 in the range equal to or less than the first vehicle speed Vs_A is larger than the maximum value Gb1_max of the second gain Gb1 in the range equal to or more than the second vehicle speed Vs_B. In this case, the minimum value Gb1_min of the second gain Gb1 in the range equal to or less than the first vehicle speed Vs_A is larger than the minimum value Ga1_min of the first gain Ga1 in the range equal to or more than the second vehicle speed Vs_B.

The maximum value Ga1_max of the first gain Ga1 in the range equal to or less than the first vehicle speed Vs_A may be smaller than the maximum value Gb1_max of the second gain Gb1 in the range equal to or more than the second vehicle speed Vs_B, and the minimum value Gb1_min of the second gain Gb1 in the range equal to or less than the first vehicle speed Vs_A may be smaller than the minimum value Ga1_min of the first gain Ga1 in the range equal to or more than the second vehicle speed Vs_B.

The maximum value Ga1_max of the first gain Ga1 in the range equal to or less than the first vehicle speed Vs_A may be equal to the maximum value Gb1_max of the second gain Gb1 in the range equal to or more than the second vehicle speed Vs_B, and the minimum value Gb1_min of the second gain Gb1 in the range equal to or less than the first vehicle speed Vs_A may be equal to the minimum value Ga1_min of the first gain Ga1 in the range equal to or more than the second vehicle speed Vs_B.

Respective values and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set based on the motion performance, vehicle specifications, and the like of the vehicle on which the control device 50 according to the present disclosure is mounted.

The second gain ratio generator 230b generates a first gain Ga2 that increases or decreases depending on the actual steering angle θh_act, and generates a second gain Gb2 such that the sum of the first gain Ga2 and the second gain Gb2 is 1.

The second gain ratio generator 230b monotonically decreases the first gain Ga2 within the range from the first steering angle θh_A to the second steering angle θh_B. Accordingly, the second gain Gb2 monotonically increases within the range from the first steering angle θh_A to the second steering angle θh_B. The first steering angle θh_A is, for example, 3 (deg). The second steering angle θh_B is, for example, 20 (deg). The present disclosure is not limited by the respective values of the first steering angle θh_A and the second steering angle θh_B.

FIG. 31B illustrates an example in which the maximum value Ga2_max of the first gain Ga2 in the range equal to or less than the first steering angle θh_A is larger than the maximum value Gb2_max of the second gain Gb2 in the range equal to or more than the second steering angle θh_B. In this case, the minimum value Gb2_min of the second gain Gb2 in the range equal to or less than the first steering angle θh_A is larger than the minimum value Ga2_min of the first gain Ga2 in the range equal to or more than the second steering angle θh_B.

The maximum value Ga2_max of the first gain Ga2 in the range equal to or less than the first steering angle θh_A may be smaller than the maximum value Gb2_max of the second gain Gb2 in the range equal to or more than the second steering angle θh_B, and the minimum value Gb2_min of the second gain Gb2 in the range equal to or less than the first steering angle θh_A may be smaller than the minimum value Ga2_min of the first gain Ga2 in the range equal to or more than the second steering angle θh_B.

The maximum value Ga2_max of the first gain Ga2 in the range equal to or less than the first steering angle θh_A may be equal to the maximum value Gb2_max of the second gain Gb2 in the range equal to or more than the second steering angle θh_B, and the minimum value Gb2_min of the second gain Gb2 in the range equal to or less than the first steering angle θh_A may be equal to the minimum value Ga2_min of the first gain Ga2 in the range equal to or more than the second steering angle θh_B.

The first gain Ga1 and the second gain Gb1 output from the first gain ratio generator 230a, and the first gain Ga2 and the second gain Gb2 output from the second gain ratio generator 230b are input to the gain ratio calculator 231. The gain ratio calculator 231 calculates the first gain Ga by using the following Expression (22) and calculates the second gain Gb by using the following Expression (23).

$$Ga=(Ga1×Ga2)/\{(Ga1×Ga2)+(Gb1×Gb2)\} \qquad (22)$$

$$Gb=(Gb1×Gb2)/\{(Ga1×Ga2)+(Gb1×Gb2)\} \qquad (23)$$

The first gain Ga is multiplied by the torque value Tref_a (first torque value) by the multiplier 261. The second gain Gb is multiplied by the torque value Tref_d (second torque value) by the multiplier 262.

In the configuration example illustrated in FIG. 30, a steering reaction force corresponding to the road surface reaction force torque estimation value Tsat_est can be given to the steering wheel 1 at a ratio corresponding to both the vehicle speed Vs and the actual steering angle θh_act. Specifically, in a range in which the vehicle speed Vs or the actual steering angle θh_act is relatively small, the steering torque target value generator 200 generates the steering torque target value Th_ref by multiplying the torque value Tref_a (first torque value) output from the steering reaction force torque value generator 210 by a relatively large first gain Ga, whereas in a range in which the vehicle speed Vs or the actual steering angle θh_act is relatively large, the steering torque target value generator 200 generates the steering torque target value Th_ref by multiplying the torque value Tref_d (second torque value) output from the road surface reaction force sensitive torque compensation value generator 220 by a relatively large second gain Gb. Thus, it is possible to obtain a steering feeling that reflects the condition of the road surface, the vehicle speed Vs, and the actual steering angle θh_act.

The gain ratio setting example using the vehicle speed Vs as a parameter is merely exemplary, and is not limited to the example illustrated in FIG. 31A described above. For example, within the range from the first vehicle speed Vs_A to the second vehicle speed Vs_B, the first gain Ga1 gradually may decrease as the vehicle speed Vs increases, and accordingly, the second gain Gb1 may gradually increase as the vehicle speed Vs increases. For example, within the range from the first vehicle speed Vs_A to the second vehicle speed Vs_B, the first gain Ga1 may gradually increase as the vehicle speed Vs decreases, and accordingly, the second gain Gb1 may gradually decrease as the vehicle speed Vs decreases.

The gain ratio setting example using the actual steering angle θh_act as a parameter is merely exemplary, and is not limited to the example illustrated in FIG. 31B described above. For example, within the range from the first steering angle θh_A to the second steering angle θh_B, the first gain Ga2 may gradually decrease as the actual steering angle θh_act increases, and accordingly, the second gain Gb2 may gradually increase as the actual steering angle θh_act increases. For example, within the range from the first steering angle θh_A to the second steering angle θh_B, the first gain Ga2 may gradually increase as the actual steering angle θh_act decreases, and accordingly, the second gain Gb2 may gradually decrease as the actual steering angle θh_act decreases.

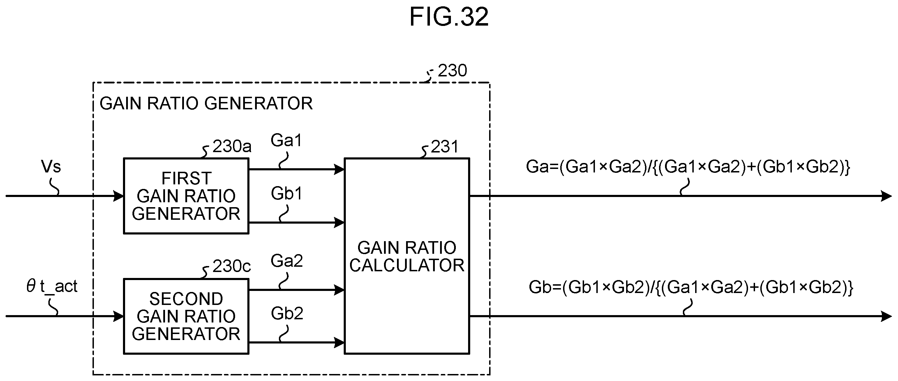

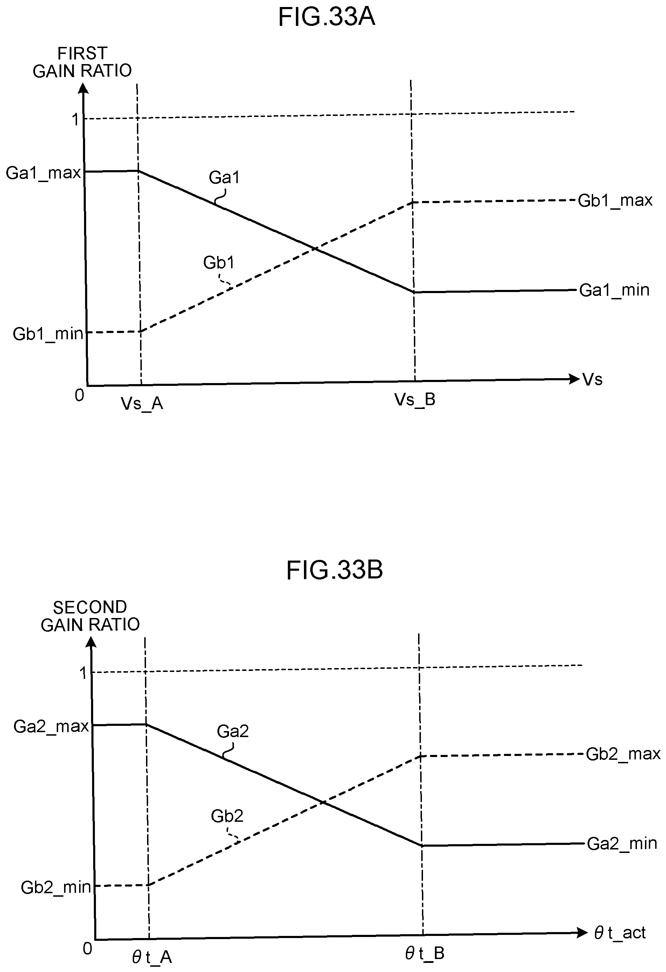

FIG. 32 is a block diagram illustrating a configuration example of a gain ratio generator in a case where a vehicle speed and an actual steered angle are used as parameters. FIGS. 33A and 33B are line graphs conceptually illustrating an example of a gain ratio setting example using a vehicle speed as a parameter. FIG. 33B is a line graph conceptually illustrating an example of a gain ratio setting example using an actual steered angle as a parameter.

In the configuration example illustrated in FIG. 32, the vehicle speed Vs and the actual steered angle θt_act are input to the gain ratio generator 230. As illustrated in FIG. 32, the gain ratio generator 230 includes a first gain ratio generator 230a, a second gain ratio generator 230c, and a gain ratio calculator 231.

The first gain ratio generator 230a generates the first gain Ga1 that increases or decreases depending on the vehicle speed Vs, and generates the second gain Gb1 such that the sum of the first gain Ga1 and the second gain Gb1 is 1.

The first gain ratio generator 230a monotonically decreases the first gain Ga1 within the range from the first vehicle speed Vs_A to the second vehicle speed Vs_B. Accordingly, the second gain Gb1 monotonically increases within the range from the first vehicle speed Vs_A to the second vehicle speed Vs_B. The first vehicle speed Vs_A is, for example, 5 (km/h). The second vehicle speed Vs_B is, for example, 30 (km/h). The present disclosure is not limited by the values of the first vehicle speed Vs_A and the second vehicle speed Vs_B.

FIG. 33A illustrates an example in which the maximum value Ga1_max of the first gain Ga1 in the range equal to or less than the first vehicle speed Vs_A is larger than the maximum value Gb1_max of the second gain Gb1 in the range equal to or more than the second vehicle speed Vs_B. In this case, the minimum value Gb1_min of the second gain Gb1 in the range equal to or less than the first vehicle speed Vs_A is larger than the minimum value Ga1_min of the first gain Ga1 in the range equal to or more than the second vehicle speed Vs_B.

The maximum value Ga1_max of the first gain Ga1 in the range equal to or less than the first vehicle speed Vs_A may be smaller than the maximum value Gb1_max of the second gain Gb1 in the range equal to or more than the second vehicle speed Vs_B, and the minimum value Gb1_min of the second gain Gb1 in the range equal to or less than the first vehicle speed Vs_A may be smaller than the minimum value Ga1_min of the first gain Ga1 in the range equal to or more than the second vehicle speed Vs_B.

The maximum value Ga1_max of the first gain Ga1 in the range equal to or less than the first vehicle speed Vs_A may be equal to the maximum value Gb1_max of the second gain Gb1 in the range equal to or more than the second vehicle speed Vs_B, and the minimum value Gb1_min of the second gain Gb1 in the range equal to or less than the first vehicle speed Vs_A may be equal to the minimum value Ga1_min of the first gain Ga1 in the range equal to or more than the second vehicle speed Vs_B.

Respective values and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set based on the motion performance, vehicle specifications, and the like of the vehicle on which the control device 50 according to the present disclosure is mounted.

The second gain ratio generator 230c generates the first gain Ga2 that increases or decreases depending on the actual steered angle θt_act, and generates a second gain Gb2 such that the sum of the first gain Ga2 and the second gain Gb2 is 1.

The second gain ratio generator 230c monotonically decreases the first gain Ga2 within the range from the first steered angle θt_A to the second steered angle θt_B. Accordingly, the second gain Gb2 monotonically increases within the range from the first steered angle θt_sA to the second steered angle θt_B. The first steered angle θt_A is, for example, 3 (deg). The second steered angle θt_B is, for example, 20 (deg). The present disclosure is not limited by the respective values of the first steered angle θt_A and the second steered angle θt_B.

FIG. 33B illustrates an example in which the maximum value Ga2_max of the first gain Ga2 in the range equal to or less than the first steered angle θt_A is larger than the maximum value Gb2_max of the second gain Gb2 in the range equal to or more than the second steered angle θt_B. In this case, the minimum value Gb2_min of the second gain Gb2 in the range equal to or less than the first steered angle θt_A is larger than the minimum value Ga2_min of the first gain Ga2 in the range equal to or more than the second steered angle θt_B.

The maximum value Ga2_max of the first gain Ga2 in the range equal to or less than the first steered angle θt_A may be smaller than the maximum value Gb2_max of the second gain Gb2 in the range equal to or more than the second steered angle θt_B, and the minimum value Gb2_min of the second gain Gb2 in the range equal to or less than the first steered angle θt_A may be smaller than the minimum value Ga2_min of the first gain Ga2 in the range equal to or more than the second steered angle θt_B.

The maximum value Ga2_max of the first gain Ga2 in the range equal to or less than the first steered angle θt_A may be equal to the maximum value Gb2_max of the second gain Gb2 in the range equal to or more than the second steered angle θt_B, and the minimum value Gb2_min of the second gain Gb2 in the range equal to or less than the first steered angle θt_A may be equal to the minimum value Ga2_min of the first gain Ga2 in the range equal to or more than the second steered angle θt_B.

The gain ratio calculator 231 calculates the first gain Ga and the second gain Gb using Expressions (14) and (15) described in the fourth embodiment.

The first gain Ga is multiplied by the torque value Tref_a (first torque value) by the multiplier 261. The second gain Gb is multiplied by the torque value Tref_d (second torque value) by the multiplier 262.

In the configuration example illustrated in FIG. 32, a steering reaction force corresponding to the road surface reaction force torque estimation value Tsat_est can be given to the steering wheel 1 at a ratio corresponding to both the vehicle speed Vs and the actual steered angle θt_act. Specifically, in a range in which the vehicle speed Vs or the actual steered angle θt_act is relatively small, the steering torque target value generator 200 generates the steering torque target value Th_ref by multiplying the torque value Tref_a (first torque value) output from the steering reaction force torque value generator 210 by a relatively large first gain Ga, whereas in a range in which the vehicle speed Vs or the actual steered angle θt_act is relatively large, the steering torque target value generator 200 generates the steering torque target value Th_ref by multiplying the torque value Tref_d (second torque value) output from the road surface reaction force sensitive torque compensation value generator 220 by a relatively large second gain Gb. Thus, it is possible to obtain a steering feeling that reflects the condition of the road surface, the vehicle speed Vs, and the actual steered angle θt_act.

The gain ratio setting example that uses the vehicle speed Vs as a parameter is merely exemplary, and is not limited to the example illustrated in FIG. 33A described above. For example, within the range from the first vehicle speed Vs_A to the second vehicle speed Vs_B, the first gain Ga1 may gradually decrease as the vehicle speed Vs increases, and accordingly, the second gain Gb1 may gradually increase as the vehicle speed Vs increases. For example, within the range from the first vehicle speed Vs_A to the second vehicle speed Vs_B, the first gain Ga1 may gradually increase as the vehicle speed Vs decreases, and accordingly, the second gain Gb1 may gradually decrease as the vehicle speed Vs decreases.

Furthermore, the gain ratio setting example that uses the actual steered angle θt_act as a parameter is merely exemplary, and is not limited to the example illustrated in FIG. 33B described above. For example, within the range from the first steered angle θt_A to the second steered angle θt_B, the first gain Ga2 may gradually decrease as the actual steered angle θt_act increases, and accordingly, the second gain Gb2 may gradually increase as the actual steered angle θt_act increases. For example, within the range from the first steered angle θt_A to the second steered angle θt_B, the first gain Ga2 may gradually increase as the actual steered angle θt_act decreases, and accordingly, the second gain Gb2 may gradually decrease as the actual steered angle θt_act decreases.

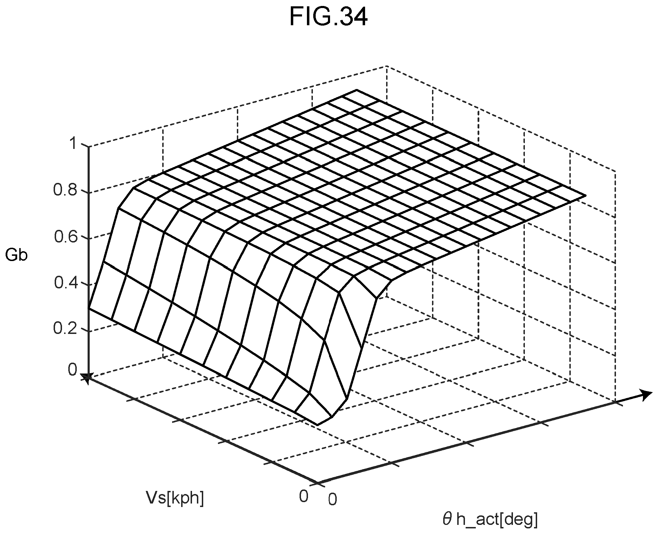

In the present disclosure, the ratio between the first gain Ga and the second gain Gb is not limited to an example in which the ratio linearly changes with respect to the change of each parameter. Specifically, for example, a gain ratio corresponding to each parameter value may be mapped, and a gain ratio corresponding to the parameter value may be applied. FIG. 34 is a 3D map conceptually illustrating an example of a gain ratio generation method.

The gain ratio generator 230 may generate the second gain Gb using a gain ratio map having the vehicle speed Vs and the actual steering angle θh_act as parameters as illustrated in FIG. 34 and calculate the first gain Ga using the following Formula (24).

$$Ga = 1 - Gb \qquad\qquad (24)$$

Alternatively, the gain ratio generator 230 may generate the first gain Ga using a gain ratio map having the vehicle speed Vs and the actual steering angle θh_act as parameters and calculate the second gain Gb using the following Formula (25).

$$Gb = 1 - Ga \qquad\qquad (25)$$

The embodiment is not limited to the gain ratio map using the vehicle speed Vs and the actual steering angle θh_act as parameters, and the first gain Ga and the second gain Gb may be generated using the gain ratio map using the vehicle speed Vs and the actual steered angle θt_act as parameters.

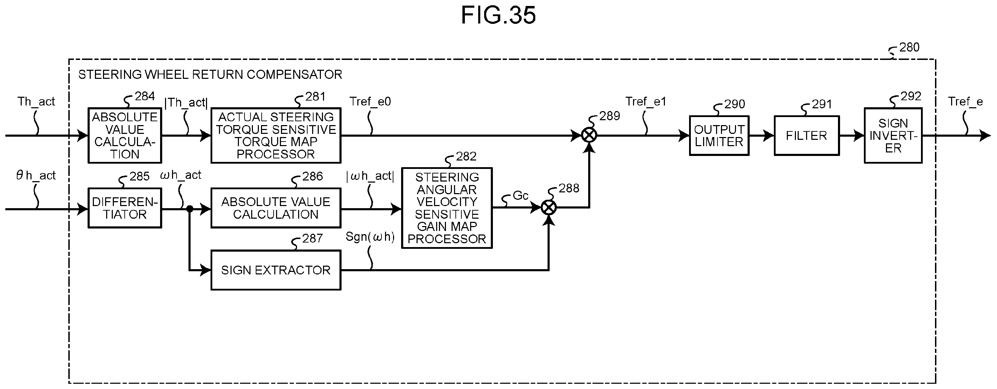

FIG. 35 is a block diagram illustrating a configuration example of a steering wheel return compensator according to the first embodiment. The steering wheel return compensator 280 according to the first embodiment includes an actual steering torque sensitive torque map processor 281 and a steering angular velocity sensitive gain map processor 282 as main components.

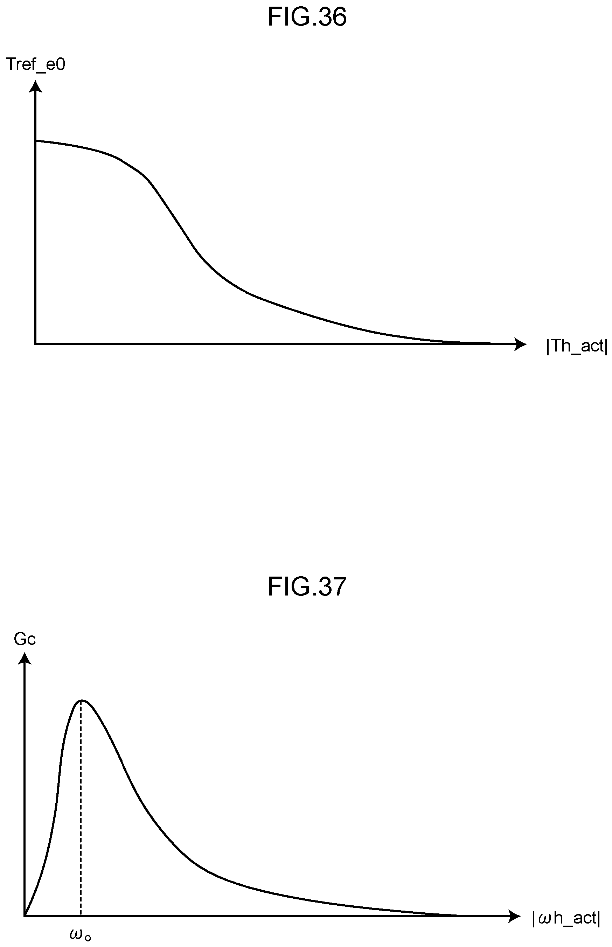

FIG. 36 is a line graph illustrating a characteristic example of an actual steering torque sensitive torque map. The actual steering torque |Th_act| subjected to the absolute value processing in an absolute value calculator 284 is input to the actual steering torque sensitive torque map processor 281. The actual steering torque sensitive torque map processor 281 generates a torque value Tref_e0 corresponding to the actual steering torque |Th_act| using the actual steering torque sensitive torque map illustrated in FIG. 36.

The torque value Tref_e0 has an actual steering torque sensitive characteristic of increasing and decreasing depending on the actual steering torque |Th_act|. More specifically, as illustrated in FIG. 36, the torque value Tref_e0 decreases as the actual steering torque |Th_act| increases. That is, the reaction force obtained by the torque value Tref_e0 derived by the actual steering torque sensitive torque map illustrated in FIG. 36 increases as the actual steering torque Th_act decreases.

FIG. 37 is a line graph illustrating a characteristic example of a steering angular velocity sensitive gain map. The steering angular velocity |ωh_act| obtained by differentiating the actual steering angle θh_act by a differentiator 285 and performing absolute value processing by an absolute value calculator 286 is input to the steering angular velocity sensitive gain map processor 282. The steering angular velocity sensitive gain map processor 282 generates a third gain Gc based on the steering angular velocity |ωh_act| using the steering angular velocity sensitive gain map illustrated in FIG. 37.

The third gain Gc has a steering angular velocity sensitive characteristic of increasing and decreasing depending on the steering angular velocity |ωh_act|. More specifically, as illustrated in FIG. 37, the third gain Gc has a characteristic of rapidly increasing as the steering angular velocity |ωh_act| increases in a range equal to or less than a predetermined steering angular velocity $\omega_0$, and gradually decreasing as the steering angular velocity |ωh_act| increases when exceeding the predetermined steering angular velocity $\omega_0$.

The third gain Gc generated by the steering angular velocity sensitive gain map processor 282 is multiplied by after the sign Sgn(ωh) of the steering angular velocity ωh_act by a multiplier 288 and then is multiplied by the torque value Tref_e0 by the multiplier 289. Thus, a torque value Tref_e1 corresponding to the increase or decrease of the steering angular velocity ωh_act is obtained.

An output limiter 290 performs output limitation processing on the torque value Tref_e1. In the output limiter 290, an upper limit value and a lower limit value for the torque value Tref_e1 are set in advance. The output limiter 290 limits the upper and lower limit values of the torque value Tref_e1 and outputs the torque value Tref_e1 to a filter 291.

The filter 291 performs filter processing on the torque value after the output limitation processing. Specifically, the filter 291 is a low-pass filter and reduces a high-frequency noise component included in the torque value Tref_e1 by filter processing by the low-pass filter.

The torque value after the filter processing is subjected to sign inversion processing by a sign inverter 292 and is output as a torque compensation value Tref_e (third torque value). As a result, the torque compensation value Tref_e (third torque value) is output as a torque value that provides steering force in a direction opposite to the steering direction.

The steering torque target value generator 200 adds (adders 271, 272, 273, and 274) a torque value Ga×Tref_a obtained by multiplying the torque value Tref_a (first torque value) output from the steering reaction force torque value generator 210 by the first gain Ga (multiplier 261), Gb×Tref_d obtained by multiplying the torque value Tref_d (second torque value) output from the road surface reaction force sensitive torque compensation value generator 220 by the second gain Gb (multiplier 262), a torque value Tref_b output from the damping torque value generator 240, a torque compensation value Tref_c output from the hysteresis compensator 250, and a torque compensation value Tref_e (third torque value) output from the steering wheel return compensator 280, and outputs the result as the steering torque target value Th_ref.

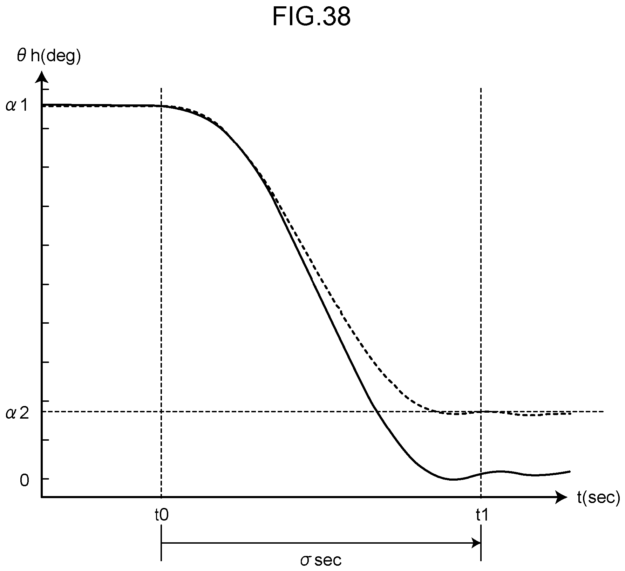

FIG. 38 is a graph conceptually describing a specific example of an effect of the steering wheel return compensator according to the first embodiment. In FIG. 38, the vertical axis represents the steering angle θh, and the horizontal axis represents time t.

FIG. 38 illustrates an example in which, at time t0, the driver releases the steering wheel held at the steering angle θh ≈ α1 (deg) during low-speed traveling on the low μ road. A solid line illustrated in FIG. 38 indicates the locus of the steering angle θh in the configuration of the first embodiment including the steering wheel return compensator 280, and a broken line indicates the locus of the steering angle θh in a configuration not including the steering wheel return compensator 280.

In the case of traveling on the low μ road, the torque value Tref_d (second torque value) generated by the road surface reaction force sensitive torque compensation value generator 220 becomes small. Therefore, in the configuration without the steering wheel return compensator 280, the steering reaction force applied during traveling on the low μ road

becomes small, and the steering feeling may become unstable.

In particular, when the first gain Ga and the second gain Gb are generated with the vehicle speed Vs as a parameter (for example, FIGS. 27A, 27B, and 27C), the second gain Gb multiplied by the torque value Tref_d (second torque value) becomes small during low-speed traveling. Specifically, for example, when the driver releases the steering wheel from a state where the driver turns the steering wheel while traveling on the low μ road at low speed, the time until the steering wheel position returns to the center position (steering angle θh ≈ 0 (deg)) becomes long, or the steering wheel position does not return to the center position and a residual steering angle may occur. The example indicated by the broken line in FIG. 38 illustrates an example in which the steering angle does not fully return to the steering angle θh ≈ 0 (deg) after the driver releases the steering wheel at time t0, and a residual steering angle of the steering angle θh ≈ α2 (deg) occurs at or after time t1, which is σ (sec) after time t0.

Since the steering torque target value generator 200 according to the first embodiment includes the steering wheel return compensator 280, a stable steering reaction force can be applied even when the vehicle is traveling on the low μ road at low speed. Specifically, the example indicated by the solid line in FIG. 38 illustrates an example in which the steering reaction force is appropriately applied by the torque compensation value Tref_e (third torque value) generated by the steering wheel return compensator 280, the driver releases the steering wheel at time t0, and then the steering wheel position returns to the steering angle θh ≈ 0 (deg) at or after time t1.

(Second Embodiment)

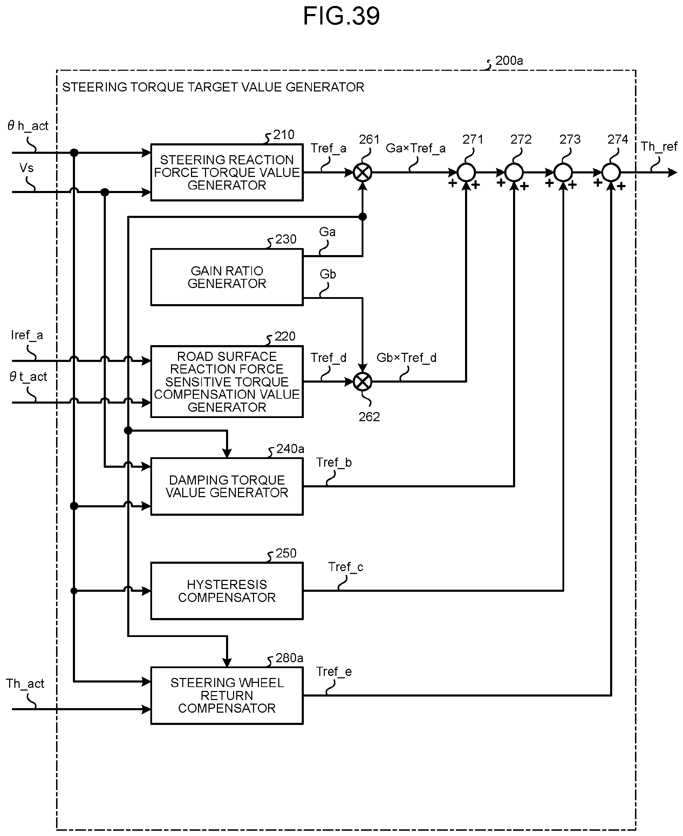

FIG. 39 is a block diagram illustrating a configuration example of a steering torque target value generator according to a second embodiment. In the second embodiment, components and operations different from those in the first embodiment will be described in detail, and description of components and operations similar to those in the first embodiment may be omitted.

A steering torque target value generator 200a according to the second embodiment illustrated in FIG. 39 is configured to apply a gain corresponding to the gain ratio between the first gain Ga and the second gain Gb generated by the gain ratio generator 230 to a torque compensation value Tref_e (third torque value) generated by a steering wheel return compensator 280a and a torque value Tref_b (fourth torque value) generated by a damping torque value generator 240a. The following describes configurations and operations of the steering wheel return compensator 280a and the damping torque value generator 240a according to the second embodiment.

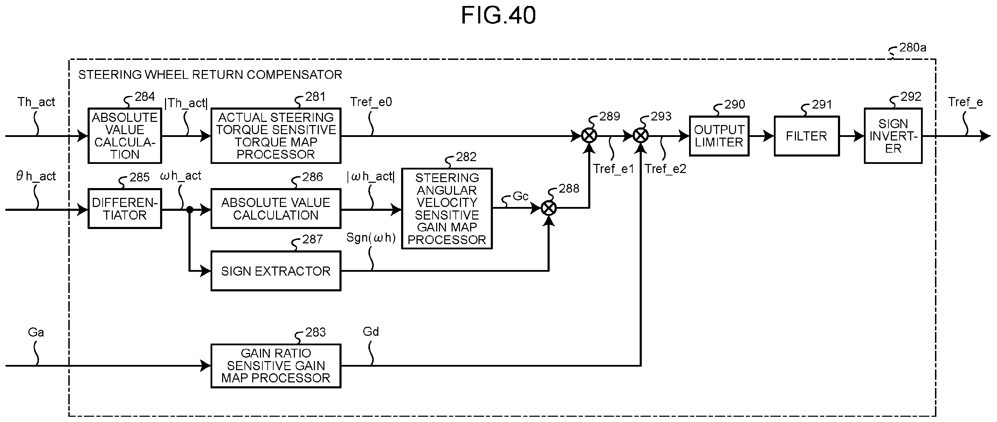

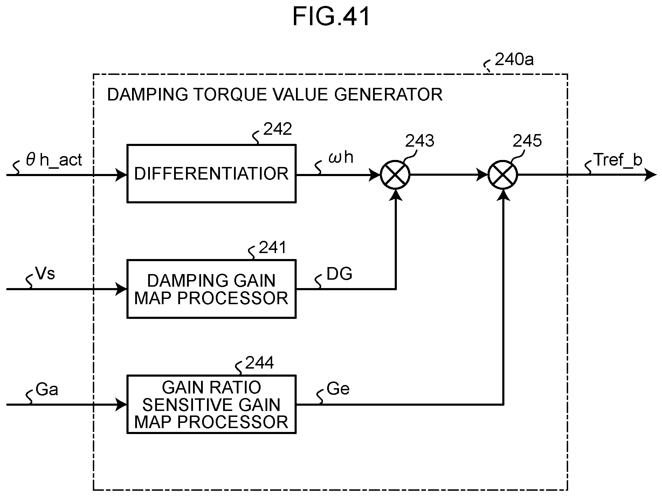

FIG. 40 is a block diagram illustrating a configuration example of a steering wheel return compensator according to the second embodiment. FIG. 41 is a block diagram illustrating a configuration example of a damping torque value generator according to the second embodiment. The steering wheel return compensator 280a according to the second embodiment includes a gain ratio sensitive gain map processor 283 in addition to the configuration of the first embodiment illustrated in FIG. 35. The damping torque value generator 240a according to the second embodiment includes a gain ratio sensitive gain map processor 244 in addition to the configuration of the first embodiment illustrated in FIG. 15.

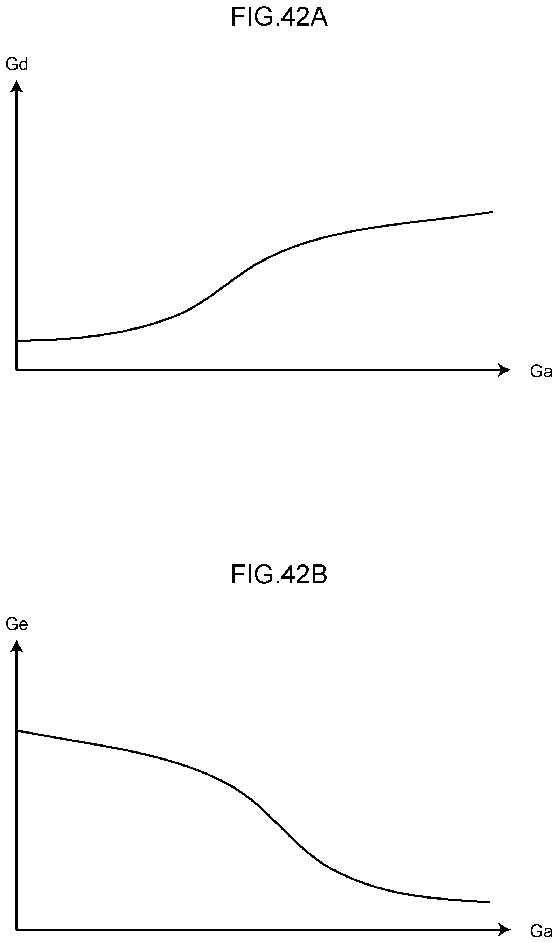

FIG. 42A is a line graph illustrating a first characteristic example of the gain ratio sensitive gain map of the steering wheel return compensator. FIG. 42B is a line graph illustrating a first characteristic example of the gain ratio sensitive gain map of the damping torque value generator.

The first gain Ga generated by the gain ratio generator 230 is input to the gain ratio sensitive gain map processor 283 of the steering wheel return compensator 280a. The gain ratio sensitive gain map processor 283 generates a fourth gain Gd based on the first gain Ga, for example, using the gain ratio sensitive gain map illustrated in FIG. 42A.

In the first characteristic example illustrated in FIG. 42A, the fourth gain Gd has a first gain sensitive characteristic of increasing and decreasing depending on the first gain Ga. More specifically, the fourth gain Gd increases as the first gain Ga increases.

The first gain Ga generated by the gain ratio generator 230 is also input to the gain ratio sensitive gain map processor 244 of the damping torque value generator 240a, similarly to the gain ratio sensitive gain map processor 283 of the steering wheel return compensator 280a. The gain ratio sensitive gain map processor 244 generates the fifth gain Ge corresponding to the first gain Ga, for example, using the gain ratio sensitive gain map illustrated in FIG. 42B.

In the first characteristic example illustrated in FIG. 42B, the fifth gain Ge has a first gain sensitive characteristic of increasing and decreasing depending on the first gain Ga. More specifically, the fifth gain Ge decreases as the first gain Ga increases.

The characteristics of the gain ratio sensitive gain map of the steering wheel return compensator 280a and the gain ratio sensitive gain map of the damping torque value generator 240a are not limited to the first characteristic examples illustrated in FIGS. 42A and 42B.

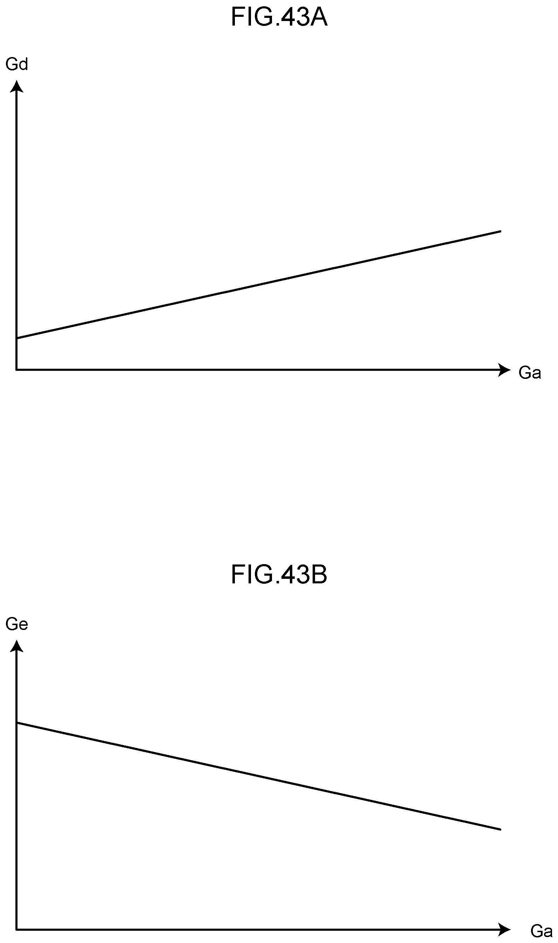

FIG. 43A is a line graph illustrating a second characteristic example of the gain ratio sensitive gain map of the steering wheel return compensator. FIG. 43B is a line graph illustrating a second characteristic example of the gain ratio sensitive gain map of the damping torque value generator.

In the second characteristic example of the gain ratio sensitive gain map of the steering wheel return compensator illustrated in FIG. 43A, the fourth gain Gd increases as the first gain Ga increases.

In the second characteristic example of the gain ratio sensitive gain map of the damping torque value generator illustrated in FIG. 43B, the fifth gain Ge decreases as the first gain Ga increases.

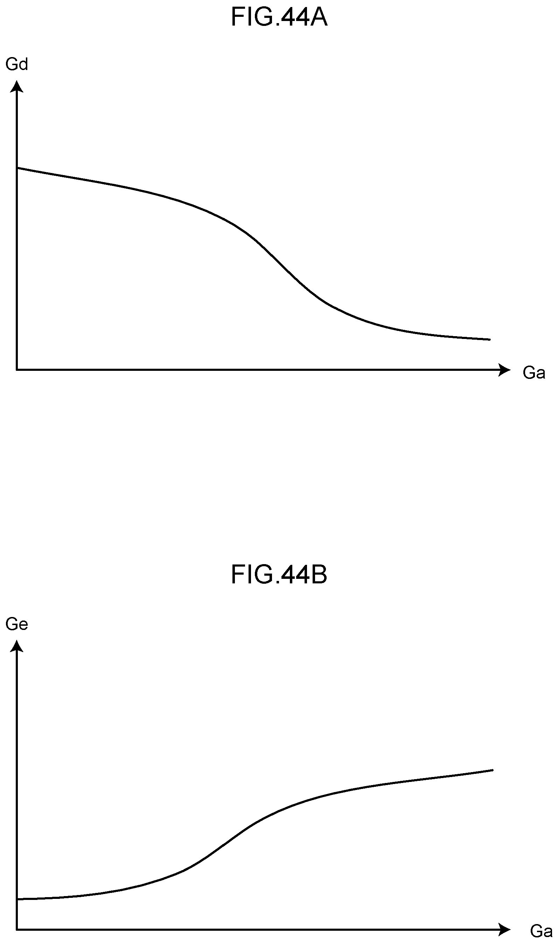

FIG. 44A is a line graph illustrating a third characteristic example of the gain ratio sensitive gain map of the steering wheel return compensator. FIG. 44B is a line graph illustrating a third characteristic example of the gain ratio sensitive gain map of the damping torque value generator.

In the third characteristic example of the gain ratio sensitive gain map of the steering wheel return compensator illustrated in FIG. 44A, the fourth gain Gd decreases as the first gain Ga increases.

In the third characteristic example of the gain ratio sensitive gain map of the damping torque value generator illustrated in FIG. 44B, the fifth gain Ge increases as the first gain Ga increases.

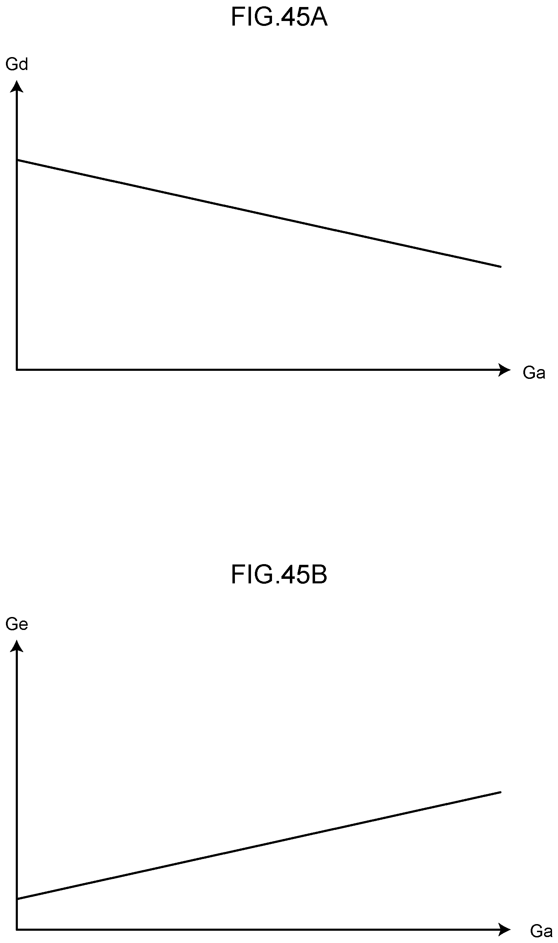

FIG. 45A is a line graph illustrating a fourth characteristic example of the gain ratio sensitive gain map of the steering wheel return compensator. FIG. 45B is a line graph illustrating a fourth characteristic example of the gain ratio sensitive gain map of the damping torque value generator.

In the fourth characteristic example of the gain ratio sensitive gain map of the steering wheel return compensator illustrated in FIG. 45A, the fourth gain Gd decreases as the first gain Ga increases.

In the fourth characteristic example of the gain ratio sensitive gain map of the damping torque value generator illustrated in FIG. 45B, the fifth gain Ge increases as the first gain Ga increases.

The steering wheel return compensator 280a obtains a torque value Tref_e2 by multiplying the torque value Tref_e1 corresponding to the increase or decrease of the steering angular velocity $\omega$h_act by the fifth gain Ge by the multiplier 293. Then, the output limiter 290 limits the upper and lower limit values of the torque value Tref_e2, the filter 291 performs the filter processing on the torque value after the output limitation processing, and the sign inverter 292 performs the sign inversion processing on the torque value after the filter processing and outputs the torque value as the torque compensation value Tref_e (third torque value).

The damping torque value generator 240a multiplies the steering angular velocity $\omega$h by the damper gain DG, then multiplies the resulting value by the fifth gain Ge using a multiplier 245, and outputs the result as the torque value Tref_b (fourth torque value).

The steering torque target value generator 200a adds (adders 271, 272, 273, and 274) a torque value Ga×Tref_a obtained by multiplying the torque value Tref_a (first torque value) output from the steering reaction force torque value generator 210 by the first gain Ga (multiplier 261), Gb×Tref_d obtained by multiplying the torque value Tref_d (second torque value) output from the road surface reaction force sensitive torque compensation value generator 220 by the second gain Gb (multiplier 262), a torque value Tref_b (fourth torque value) output from the damping torque value generator 240a, a torque compensation value Tref_c output from the hysteresis compensator 250, and a torque compensation value Tref_e (third torque value) output from the steering wheel return compensator 280a, and outputs the result as the steering torque target value Th_ref.

As described above, in the second embodiment, the gain ratio of the torque compensation value Tref_e (third torque value) generated by the steering wheel return compensator 280a and the torque value Tref_b (fourth torque value) generated by the damping torque value generator 240a is controlled based on the gain ratio between the first gain Ga and the second gain Gb generated by the gain ratio generator 230. Thus, for example, the ratio between the fourth gain Gd by which the gain distribution of the torque compensation value Tref_e (third torque value) is determined and the fifth gain Ge by which the gain distribution of the torque value Tref_b (fourth torque value) is determined can be set based on the vehicle conditions such as the vehicle weight and the traveling specifications, or the traveling mode such as an urban traveling mode or an expressway traveling mode, whereby the steering feeling can be optimized.

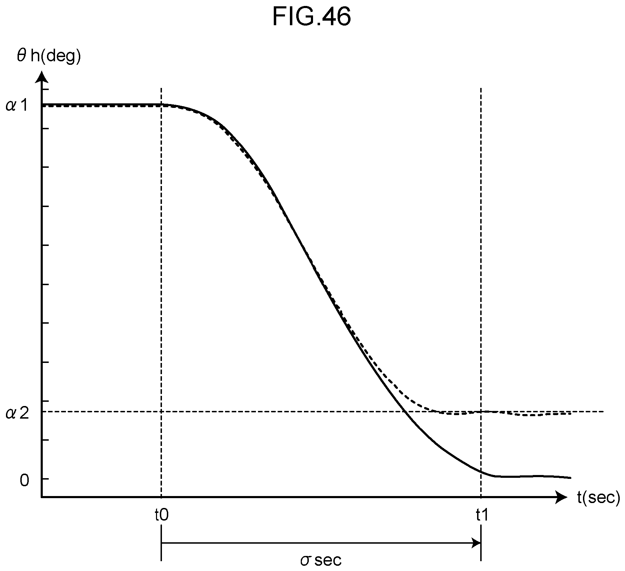

FIG. 46 is a graph conceptually describing a specific example of an effect of the steering wheel return compensator according to the second embodiment. In FIG. 46, the vertical axis represents the steering angle $\theta$h, and the horizontal axis represents time t.

FIG. 46 illustrates an example in which the driver releases the steering wheel held at the steering angle $\theta$h $\approx \alpha$1 (deg) during low-speed traveling on the low $\mu$ road at time t0. A solid line illustrated in FIG. 46 indicates the locus of the steering angle $\theta$h in the configuration of the second embodiment including the steering wheel return compensator 280a, and a broken line indicates the locus of the steering angle $\theta$h in a configuration not including the steering wheel return compensator 280a.

Since the configuration of the steering torque target value generator 200a according to the second embodiment also includes the steering wheel return compensator 280a as in the first embodiment, a stable steering reaction force can be applied even when the vehicle is traveling on the low $\mu$ road at low speed. Specifically, the example indicated by the solid line in FIG. 46 illustrates an example in which the steering reaction force is appropriately applied by the torque compensation value Tref_e (third torque value) generated by the steering wheel return compensator 280a, the driver releases the steering wheel at time t0, and then the steering wheel position returns to the steering angle $\theta$h $\approx$ 0 (deg) after time t1.

In the configuration of the steering torque target value generator 200a according to the second embodiment, in addition to the above, a gain corresponding to the gain ratio between the first gain Ga and the second gain Gb generated by the gain ratio generator 230 is applied to the torque value Tref_b (fourth torque value) generated by the damping torque value generator 240a and the torque compensation value Tref_e (third torque value) generated by the steering wheel return compensator 280a. In the configuration of the steering torque target value generator 200a according to the second embodiment, by appropriately setting the characteristics of the gain ratio sensitive gain map of the damping torque value generator 240a and the characteristics of the gain ratio sensitive gain map of the steering wheel return compensator 280a based on, for example, the vehicle conditions, it is possible to obtain a steering feeling that more appropriately reflects the condition of the road surface and the state of the vehicle.

The drawings used in the above-described embodiments are conceptual diagrams for describing the present disclosure in a qualitative manner and are not limited thereto. In addition, the above-described embodiments are preferred embodiments of the present disclosure, but are not limited thereto, and various modifications can be made without departing from the gist of the present disclosure.

Reference Signs List

    1 STEERING WHEEL
    2 COLUMN SHAFT
    3a, 3b TIE ROD
    5L, 5R STEERED WHEEL
    6a, 6b ARM
    10 VEHICLE SPEED SENSOR
    11 IGNITION KEY
    12 BATTERY
    30 REACTION FORCE DEVICE
    31 REACTION FORCE MOTOR
    32 DECELERATION MECHANISM
    33 STEERING ANGLE SENSOR
    34 TORQUE SENSOR
    35 STOPPER (ROTATION LIMITING MECHANISM)
    40 TURNING DEVICE
    41 TURNING MOTOR
    42 DECELERATION MECHANISM
    43 ANGLE SENSOR
    44 PINION RACK MECHANISM
    50 CONTROL DEVICE
    60 REACTION FORCE CONTROL SYSTEM
    70 TURNING CONTROL SYSTEM
    200, 200a STEERING TORQUE TARGET VALUE GENERATOR
    210 STEERING REACTION FORCE TORQUE VALUE GENERATOR
    211 STEERING REACTION FORCE TORQUE MAP PROCESSOR
    220 ROAD SURFACE REACTION FORCE SENSITIVE TORQUE COMPENSATION VALUE GENERATOR
    221 ROAD SURFACE REACTION FORCE TORQUE ESTIMATOR
    222 ROAD SURFACE REACTION FORCE SENSITIVE TORQUE MAP PROCESSOR
    230 GAIN RATIO GENERATOR
    230a FIRST GAIN RATIO GENERATOR
    230b, 230c SECOND GAIN RATIO GENERATOR
    231 GAIN RATIO CALCULATOR
    240, 240a DAMPING TORQUE VALUE GENERATOR
    241 DAMPING GAIN MAP PROCESSOR
    244 GAIN RATIO SENSITIVE GAIN MAP PROCESSOR
    250 HYSTERESIS COMPENSATOR
    251 HYSTERESIS COMPENSATION VALUE CALCULATOR
    280, 280a STEERING WHEEL RETURN COMPENSATOR
    281 ACTUAL STEERING TORQUE SENSITIVE TORQUE MAP PROCESSOR
    282 STEERING ANGULAR VELOCITY SENSITIVE GAIN MAP PROCESSOR
    283 GAIN RATIO SENSITIVE GAIN MAP PROCESSOR

400 STEERING TORQUE CONTROLLER
500 CURRENT CONTROLLER
600 STEERED ANGLE TARGET VALUE GENERATOR
700 STEERED ANGLE CONTROLLER
710 FEEDFORWARD COMPENSATOR
720 ADDER
730 PID CONTROLLER
740 STABILIZATION COMPENSATOR
750 ADDER
760 OUTPUT LIMITER
770, 770a FRICTION COMPENSATOR
771, 771a CURRENT COMPENSATION VALUE CALCULATOR
772 DIFFERENTIATOR
773 CURRENT SENSITIVE GAIN GENERATOR
774 PREVIOUS VALUE HOLDER
775 ABSOLUTE VALUE CALCULATOR
776 MULTIPLIER
800 CURRENT CONTROLLER

**Claims**

1. A control device for a vehicle steering system comprising a steering angle sensor that detects a steering angle of a steering wheel, a torque sensor that detects a steering torque, a reaction force device that drives a reaction force motor that gives a steering reaction force to the steering wheel based on the steering angle and the steering torque, and a turning device that drives a turning motor that steers the steered wheel of the steering wheel based on the steering angle, the control device comprising:

   a steering torque target value generator that generates a steering torque target value that is a target value of the steering torque;
   a steered angle target value generator that generates, based on the steering angle, a steered angle target value that is a target value of the steered angle of the steered wheel; and
   a steered angle controller that generates, based on the steered angle target value, a first turning motor current command value that is a target value of a current to be supplied to the turning motor, wherein
   the steering torque target value generator comprises:

      a steering reaction force torque value generator that generates a first torque value that increases or decreases depending on at least the steering angle;
      a road surface reaction force sensitive torque compensation value generator that generates a second torque value that increases or decreases depending on at least a road surface reaction force torque estimation value estimated based on the first turning motor current command value;
      a gain ratio generator that generates a first gain that increases or decreases depending on at least a vehicle speed of a vehicle, and generates a second gain such that a sum of the first gain and the second gain is 1; and
      a steering wheel return compensator that generates at least a third torque value that decreases as the steering torque increases, and

   the steering torque target value generator adds a value obtained by multiplying the first torque value by the first gain, a value obtained by multiplying the second torque value by the second gain, and the third torque value to generate the steering torque target value.

2. The control device for the vehicle steering system according to claim 1, wherein
   the gain ratio generator decreases the first gain as the vehicle speed increases.

3. The control device for the vehicle steering system according to claim 2, wherein
   the steering wheel return compensator generates the third torque value by multiplying a torque value that decreases as the steering torque increases by a third gain that increases or decreases depending on a steering angular velocity.

4. The control device for the vehicle steering system according to claim 3, wherein

the steering wheel return compensator increases the third gain as the steering angular velocity increases in a range in which the steering angular velocity is equal to or less than a predetermined value, and decreases the third gain as the steering angular velocity increases when the steering angular velocity exceeds the predetermined value.

5. The control device for the vehicle steering system according to claim 4, wherein

the steering wheel return compensator generates the third torque value by multiplying a torque value that decreases as the steering torque increases by a fourth gain based on a ratio between the first gain and the second gain,
the steering torque target value generator further comprises
a damping torque value generator that generates a fourth torque value obtained by multiplying a value obtained by multiplying a steering angular velocity by a damping gain that increases and decreases depending on the vehicle speed by a fifth gain based on a ratio between the first gain and the second gain, and
the steering torque target value generator adds a value obtained by multiplying the first torque value by the first gain, a value obtained by multiplying the second torque value by the second gain, the third torque value, and the fourth torque value to generate the steering torque target value.

6. The control device for the vehicle steering system according to claim 5, wherein

the fourth gain increases as the first gain increases, and
the fifth gain decreases as the first gain increases.

7. The control device for the vehicle steering system according to claim 5, wherein

the fourth gain decreases as the first gain increases, and
the fifth gain increases as the first gain increases.

8. The control device for the vehicle steering system according to any one of claims 1 to 7, wherein

the steered angle controller
comprises a friction compensator that calculates, based on the steered angle target value, a turning motor current compensation value different between a case where the steered wheel is turned rightward and a case where the steered wheel is turned leftward, and
the steered angle controller
generates a second turning motor current command value for driving the turning motor based on the first turning motor current command value and the turning motor current compensation value.

9. The control device for the vehicle steering system according to claim 8, wherein
the turning motor current compensation value has a hysteresis characteristic depending on a change in the steered angle target value.

10. The control device for the vehicle steering system according to claim 8, wherein
the turning motor current compensation value monotonically increases in a range from a first steered angle target value when steering is started to a second steered angle target value or less obtained by adding a predetermined steered angle change amount threshold to the first steered angle target value, and becomes a constant value in a range larger than the second steered angle target value.

11. The control device for the vehicle steering system according to claim 8, wherein
the friction compensator increases or decreases the turning motor current compensation value based on the second turning motor current command value.

12. The control device for the vehicle steering system according to claim 11, wherein
the turning motor current compensation value monotonically increases as the second turning motor current command value increases.

13. The control device for the vehicle steering system according to claim 12, further comprising:

a current compensation value calculator that calculates a first current compensation value; and

a current sensitive gain generator that generates a gain that monotonically increases as the second turning motor current command value increases, wherein
the friction compensator calculates a second current compensation value by multiplying the first current compensation value by the gain.

14. The control device for the vehicle steering system according to claim 12, wherein
the friction compensator holds data in which the second turning motor current command value is associated with a gain that monotonically increases as the second turning motor current command value increases, and calculates the turning motor current compensation value based on the data.

## FIG.1

# FIG.2

50

# FIG.3

EP 4 778 808 A1

# FIG.4

STEERED ANGLE CONTROLLER

700

770
FRICTION COMPEN-SATOR — It_ref

Iref_b

710
FEEDFORWARD COMPENSATOR

740
STABILIZATION COMPENSATOR

720

730
PID CONTROL-LER

STABILIZING FILTER

Iref_a    Iref_c    760
OUTPUT LIMITER

FF FILTER

$\theta$ t_ref

750

$\theta$ t_act

Iref_a

It_ref

EP 4 778 808 A1

# FIG.5

# FIG.6

## FIG.7A

## FIG.7B

# FIG.8

FIG.9

# FIG.10A

# FIG.10B

## FIG.11A

## FIG.11B

# FIG.12

# FIG.13

STEERING REACTION FORCE TORQUE VALUE GENERATOR — 210

213
SIGN EXTRACTOR

Sgn($\theta$ h)

$\theta$ h_act

212
ABSOLUTE VALUE CALCULATOR

$|\theta h|$

211
STEERING REACTION FORCE TORQUE MAP PROCESSOR

Tref_a0

Tref_a

214

Vs

## FIG.14A

## FIG.14B

## FIG.15

240

DAMPING TORQUE VALUE
GENERATOR

$\theta$ h_act

242

DIFFEREN-
TIATOR

$\omega$h

243

Tref_b

Vs

241

DAMPING
GAIN MAP
PROCESSOR

DG

# FIG.16A

# FIG.16B

# FIG.17

$\omega h$

D
(-, +)

A
(+, +)

0     $\theta h$

C
(-, -)

B
(+, -)

# FIG.18

250

HYSTERESIS COMPENSATOR

$\theta h\_act$

251

HYSTERESIS COMPENSA- TION VALUE CALCULATOR

Tref_c

252     $\omega h\_act$

DIFFEREN- TIATOR

## FIG.19

## FIG.20

ROAD SURFACE REACTION FORCE SENSITIVE TORQUE COMPENSATION VALUE GENERATOR — 220

- 221 ROAD SURFACE REACTION FORCE TORQUE ESTIMATOR
- 223 ABSOLUTE VALUE CALCULATOR
- 224 SIGN EXTRACTOR
- 222 ROAD SURFACE REACTION FORCE SENSITIVE TORQUE MAP PROCESSOR
- 225

Iref_a

Vs

Tsat_est

|Tsat_est|

Sgn(Tsat_est)

Tref_d0

Tref_d

EP 4 778 808 A1

# FIG.21

41

TURNING MOTOR  Tm

$D_M \cdot \omega_M$

$J \cdot \alpha_M$

$Fr \cdot sign(\omega_M)$

$T_{SAT}$

# FIG.22

FIG.23

# FIG.24

$\varsigma$Iref_a

$\varsigma$FL

$\varsigma$FR

PROCESSING
DEVICE

# FIG.25

Tref_d0

VEHICLE SPEED HIGH

VEHICLE SPEED MEDIUM

VEHICLE SPEED LOW

0[kph]

|Tsat_est|

## FIG.26

Tref_d

VEHICLE SPEED HIGH

VEHICLE SPEED MEDIUM

VEHICLE SPEED LOW

0[kph]

Tsat_est

## FIG.27A

## FIG.27B

## FIG.27C

## FIG.28

# FIG.29

GAIN RATIO

1

Ga_max

Ga

Gb

Gb_max

Gb_min

Ga_min

0

$\theta$ t_A

$\theta$ t_B

$\theta$ t_act

EP 4 778 808 A1

# FIG.30

**GAIN RATIO GENERATOR** — 230

Vs → FIRST GAIN RATIO GENERATOR (230a) → Ga1, Gb1

$\theta$ h_act → SECOND GAIN RATIO GENERATOR (230b) → Ga2, Gb2

GAIN RATIO CALCULATOR (231)

Ga=(Ga1×Ga2)/{(Ga1×Ga2)+(Gb1×Gb2)}

Gb=(Gb1×Gb2)/{(Ga1×Ga2)+(Gb1×Gb2)}

## FIG.31A

## FIG.31B

## FIG.32

EP 4 778 808 A1

# FIG.33A

FIRST
GAIN RATIO

1

Ga1_max

Ga1

Gb1

Gb1_max

Ga1_min

Gb1_min

0    Vs_A        Vs_B    Vs

# FIG.33B

SECOND
GAIN RATIO

1

Ga2_max

Ga2

Gb2

Gb2_max

Ga2_min

Gb2_min

0    $\theta$ t_A        $\theta$ t_B    $\theta$ t_act

FIG.34

## FIG.35

EP 4 778 808 A1

## FIG.36

## FIG.37

# FIG.38

# FIG.39

# FIG.40

STEERING WHEEL RETURN COMPENSATOR

Th_act → 284 ABSOLUTE VALUE CALCULATION → |Th_act| → 281 ACTUAL STEERING TORQUE SENSITIVE TORQUE MAP PROCESSOR → Tref_e0

θh_act → 285 DIFFERENTIATOR → ωh_act → 286 ABSOLUTE VALUE CALCULATION → |ωh_act| → 282 STEERING ANGULAR VELOCITY SENSITIVE GAIN MAP PROCESSOR → Gc → 288

287 SIGN EXTRACTOR → Sgn(ωh)

Ga → 283 GAIN RATIO SENSITIVE GAIN MAP PROCESSOR → Gd

289 → 293 Tref_e1 Tref_e2 → 290 OUTPUT LIMITER → 291 FILTER → 292 SIGN INVERTER → Tref_e

EP 4 778 808 A1

# FIG.41

DAMPING TORQUE VALUE GENERATOR — 240a

$\theta$ h_act → DIFFERENTIATIOR (242) → $\omega$h → (243) → (245) → Tref_b

Vs → DAMPING GAIN MAP PROCESSOR (241) → DG

Ga → GAIN RATIO SENSITIVE GAIN MAP PROCESSOR (244) → Ge

## FIG.42A

## FIG.42B

## FIG.43A

## FIG.43B

## FIG.44A

## FIG.44B

## FIG.45A

## FIG.45B

FIG.46

## INTERNATIONAL SEARCH REPORT

| International application No. |
| --- |
| **PCT/JP2024/016215** |

**A. CLASSIFICATION OF SUBJECT MATTER**

***B62D 6/00***(2006.01)i; *B62D 101/00*(2006.01)n; *B62D 113/00*(2006.01)n; *B62D 117/00*(2006.01)n; *B62D 119/00*(2006.01)n
FI: B62D6/00; B62D101:00; B62D113:00; B62D117:00; B62D119:00

According to International Patent Classification (IPC) or to both national classification and IPC

**B. FIELDS SEARCHED**

Minimum documentation searched (classification system followed by classification symbols)

B62D6/00; B62D101/00; B62D113/00; B62D117/00; B62D119/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2013/061568 A1 (NISSAN MOTOR CO., LTD.) 02 May 2013 (2013-05-02) | 1-2 |
| | paragraphs [0008]-[0083], fig. 1-31 | |
| A | paragraphs [0008]-[0083], fig. 1-31 | 3-14 |
| Y | JP 2020-185819 A (NSK LTD.) 19 November 2020 (2020-11-19) | 1-2 |
| | paragraphs [0021]-[0126], fig. 1-34 | |
| A | paragraphs [0021]-[0126], fig. 1-34 | 3-14 |
| A | WO 2021/157727 A1 (NSK LTD.) 12 August 2021 (2021-08-12) | 1-14 |
| | entire text, all drawings | |
| A | JP 2022-160308 A (JTEKT CORP.) 19 October 2022 (2022-10-19) | 1-14 |
| | entire text, all drawings | |
| A | JP 2020-192927 A (NSK LTD.) 03 December 2020 (2020-12-03) | 1-14 |
| | entire text, all drawings | |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 July 2024** | **23 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

EP 4 778 808 A1

**INTERNATIONAL SEARCH REPORT**

International application No.

**PCT/JP2024/016215**

C.    DOCUMENTS CONSIDERED TO BE RELEVANT

| Category* | Citation of document, with indication, where appropriate, of the relevant passages | Relevant to claim No. |
|---|---|---|
| P, A | JP 2023-159537 A (NSK LTD.) 01 November 2023 (2023-11-01) entire text, all drawings | 1-14 |

Form PCT/ISA/210 (second sheet) (July 2022)

## INTERNATIONAL SEARCH REPORT
### Information on patent family members

International application No.

**PCT/JP2024/016215**

| Patent document cited in search report | | | Publication date (day/month/year) | Patent family member(s) | | | Publication date (day/month/year) |
|---|---|---|---|---|---|---|---|
| WO | 2013/061568 | A1 | 02 May 2013 | (Family: none) | | | |
| JP | 2020-185819 | A | 19 November 2020 | (Family: none) | | | |
| WO | 2021/157727 | A1 | 12 August 2021 | US | 2022/0355856 | A1 | |
| | | | | entire text, all drawings | | | |
| JP | 2022-160308 | A | 19 October 2022 | US | 2022/0315097 | A1 | |
| | | | | entire text, all drawings | | | |
| | | | | EP | 4082874 | A1 | |
| | | | | CN | 115195853 | A | |
| JP | 2020-192927 | A | 03 December 2020 | US | 2022/0315103 | A1 | |
| | | | | entire text, all drawings | | | |
| | | | | WO | 2020/241591 | A1 | |
| | | | | EP | 3978338 | A1 | |
| | | | | CN | 113891827 | A | |
| JP | 2023-159537 | A | 01 November 2023 | WO | 2023/203812 | A1 | |

Form PCT/ISA/210 (patent family annex) (July 2022)

**REFERENCES CITED IN THE DESCRIPTION**

**Patent documents cited in the description**

- WO 2019167661 A1